(19) **Europäisches Patentamt / European Patent Office / Office européen des brevets**

(11) **EP 3 330 892 A1**

(12) # EUROPEAN PATENT APPLICATION

(43) Date of publication:
06.06.2018 Bulletin 2018/23

(51) Int Cl.:
**G06K 9/00** (2006.01)

(21) Application number: **17204110.5**

(22) Date of filing: **28.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.11.2016 JP 2016232918
14.09.2017 JP 2017176660

(71) Applicant: **Ricoh Company Ltd.**
**Ohta-ku**
**Tokyo 143-8555 (JP)**

(72) Inventors:
• **YAMADA, Yuu**
**Tokyo, 143-8555 (JP)**
• **YOKOTA, Soichiro**
**Tokyo, 143-8555 (JP)**

• **YOSHIDA, Jun**
**Tokyo, 143-8555 (JP)**
• **OHBAYASHI, Yohichiroh**
**Tokyo, 143-8555 (JP)**
• **KUBOZONO, Hiroki**
**Tokyo, 143-8555 (JP)**
• **OKADA, Daisuke**
**Tokyo, 143-8555 (JP)**
• **KIMURA, Sukehiro**
**Tokyo, 143-8555 (JP)**
• **SUZUKI, Tabito**
**Tokyo, 143-8555 (JP)**
• **KIDA, Shintaroh**
**Tokyo, 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **INFORMATION PROCESSING APPARATUS, IMAGING DEVICE, DEVICE CONTROL SYSTEM, MOBILE OBJECT, INFORMATION PROCESSING METHOD, AND CARRIER MEANS**

(57) An information processing apparatus (30) includes a generation unit (307), an interpolation unit (309), and an object detection unit (311). The generation unit (307) generates, from data in which a first position in a first direction, a second position in a second direction, and a third position in a third direction of an object are associated with each other, two-dimensional distribution data in which the position in the first direction and the position in the third direction are associated with each other. The interpolation unit (309) interpolates a discontinuous area of pixels along the third direction in the two-dimensional data generated by the generation unit (307) to obtain a continuous area of pixels. The object detection unit (311) detects the object based on the continuous area along the third direction interpolated by the interpolation unit (309).

FIG. 1A

FIG. 1B

FIG. 1C

**Description**

BACKGROUND

Technical Field

Embodiments of the present disclosure relate to an information processing apparatus, an imaging device, a device control system, a mobile object, an information processing method, and carrier means.

Related Art

The body structure of an automobile has been developed in view of safety, for example, to protect a pedestrian and a passenger when an automobile clashes the pedestrian. In recent years, however, the technology for detecting people and automobiles at high speed has been developed with the advance of the information processing technology and the image processing technology. Using such a technology, automobiles have been already developed, which automatically brakes before clashing an object, thus preventing the clash. There is a need for an automatic control of automobiles to accurately measure the distance to the object, such as person or other cars. In such a measurement, range finding is performed practically using millimeter-wave radars, light detection and ranging (LiDARs), or stereo cameras.

As the technology for detecting a side-wall object (hereinafter, referred to simply as a wall), such as a guard rail or a brick wall, from an image captured by a stereo camera, the technology is disclosed (see JP-3516856-B (JP-H11-213138-A)) that is capable of detecting, as a wall surface, a set of three-dimensional objects constituting the boundary of a road even when the road is curve. Similarly, the technology is disclosed (see JP-4956099-B (JP-2008-59323-A)) that accurately detects a wall such as a guardrail at the side of the road from a captured image of a traveling path of a vehicle including the road.

However, the technologies as disclosed in Patent JP-3516856-B and JP-4956099-B have problems in stably detecting an object such as a wall from a disparity image captured by a stereo camera, when the disparity image has disparity values scattered over the image.

In view of the above, an information processing apparatus, an imaging device, a device control system, a mobile object, an information processing method, and carrier means according to the present disclosure are provided.

SUMMARY

In one aspect of this disclosure, there is provided an improved information processing apparatus including a generation unit, an interpolation unit, and an object detection unit. The generation unit generates, from data in which a position in a first direction, a position in a second direction, and a position in a third direction of an object are associated with each other, the two-dimensional distribution data in which the position in the first direction and the position in the third direction are associated with each other. The interpolation unit interpolates a discontinuous area of pixels along the third direction in the two-dimensional data generated by the generation unit to obtain a continuous area of pixels. The object detection unit detects the object based on the continuous area along the third direction interpolated by the interpolation unit.

In another aspect of this disclosure, there is provided an improved imaging device including an imaging unit and the above-described the image processing apparatus. The imaging unit captures an image of the image to generate a distance image including the data in which the position in the first direction, the position in the second direction, and the position in the third direction of the object are associated with each other.

In still another aspect of this disclosure, there is provided an improved device control system including the above-described imaging device and a control unit to control a control target based on a detection result of the object detection unit.

In yet another aspect of this disclosure, there is provided an improved mobile object that is the control target.

In further aspect of this disclosure, there is provided an improved information processing method including generating two-dimensional distribution data from data in which a position in a first direction, a position in a second direction, and a position in a third direction of an object are associated with each other, the two-dimensional distribution data in which the position in the first direction and the position in the third direction are associated with each other; interpolating a discontinuous area of pixels along the third direction in the two-dimensional data generated in the generating the two-dimensional distribution data to obtain a continuous data of pixels; and detecting the object based on the continuous area along the third direction interpolated in the interpolating.

In still further aspect of this disclosure, there is provided an improved carrier means carrying computer readable code for controlling a computer to carry out the above-described method.

According to the embodiments of the present disclosure, an object can be stably detected.

BRIEF DESCRIPTION OF THE DRAWINGS

The aforementioned and other aspects, features, and advantages of the present disclosure will be better understood by reference to the following detailed description when considered in connection with the accompanying drawings, wherein:

FIGs. 1A through 1C are illustrations of examples of a device control system according to an embodiment of the present disclosure mounted on a vehicle;
FIG. 2 is a block diagram of a configuration of the object recognition device and peripherals of the device control system of FIG. 1;
FIG. 3 is an illustration of an example of the appearance of the object recognition device of FIG. 2;
FIG. 4 is an illustration of an example of a hardware configuration of the object recognition device of FIG. 3;
FIG. 5 is a block diagram of an example of a function block of the object recognition device of FIG. 3;
FIG. 6A is an illustration of an example of a disparity image;
FIG. 6B is an illustration of an example of a V map generated by the disparity image of FIG. 6A;
FIG. 7A is an illustration of another example of a disparity image;
FIG. 7B is an illustration of an example of an U map generated by the disparity image of FIG. 7A;
FIG. 8A is an illustration of an example of an U map;
FIG. 8B is an illustration of an example of a real U map generated by the U map of FIG. 8A;
FIG. 9 is a flowchart of an example of the operation of represents a case in which the wall detection processing based on movement prediction of the object recognition device according to an embodiment of the present disclosure;
FIGs. 10A and 10B are illustrations of examples of a movement prediction area based on detection history;
FIG. 11 is an illustration of a movement prediction position calculated based on the detection history;
FIG. 12 is a flowchart of an example of the operation of wall detection processing for a real U map performed by the object recognition device according to an embodiment of the present disclosure;
FIGs. 13A and 13B are illustrations of interpolation of a linear wall by the object recognition device according to an embodiment of the present disclosure;
FIGs. 14A and 14B are illustrations of interpolation of a curved wall performed by the object recognition device according to an embodiment of the present disclosure;
FIG. 15 is a flowchart of an example of the operation of labeling processing of a labeling section of a wall detector of an object recognition apparatus according to an embodiment of the present disclosure;
FIGs. 16A and 16B are illustrations of the labeling processing of the labeling section of the wall detector of the object recognition device according to an embodiment of the present disclosure;
FIGs. 17A and 17B are illustrations of the labeling processing of the labeling section of the wall detector of the object recognition device according to an embodiment of the present disclosure;
FIG. 18 is a flowchart of an example of the operation of wall determination processing of a determiner of a wall detector of the object recognition apparatus according to an embodiment of the present disclosure;
FIGs. 19A and 19B are illustrations of the wall determination processing of the wall determiner of the object recognition device according to an embodiment of the present disclosure;
FIGs. 20A and 20B are illustrations of the processing operations of the labeling section and the determiner of the wall detector that are effective for walls;
FIG. 21 is a flowchart of an example of the operation of area determined processing of an area determiner of the wall detector of the object recognition apparatus according to an embodiment of the present disclosure;
FIGs. 22A and 22B are illustrations of an area determined by the area determiner of the wall detector;
FIGs. 23A and 23B are illustrations of interpolation of a linear wall by the object recognition device according to a variation; and
FIGs. 24A and 24B are illustrations of interpolation of a curved wall by the object recognition device according to a variation of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity.

However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

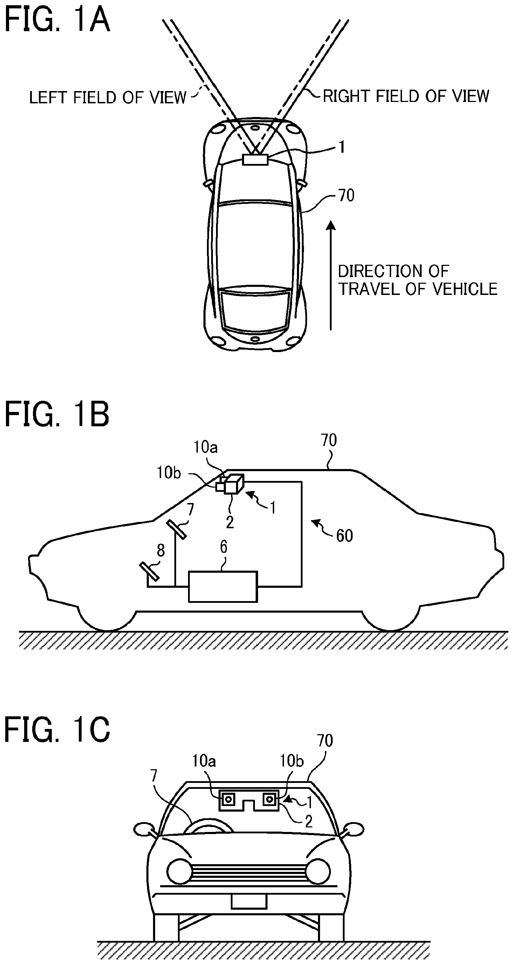

A description is given of embodiments of an information processing apparatus, an imaging device, a device control system, a mobile object, an information processing method, and a program according to the present disclosure, referring to FIGs. 1 through 24. The present disclosure is not limited to the following embodiments, and the constituent elements of the embodiments includes those which can be easily conceived by those skilled in the art, substantially the same ones, and those in the following embodiments include those which can be easily conceived by those skilled in the art, substantially the same, and within equivalent ranges. Furthermore, various omissions, substitutions, changes and combinations of constituent elements can be made without departing from the gist of the following embodiments.

Schematic Configuration of Vehicle Including Device Control System

FIGs. 1A through 1C are illustrations of examples of a device control system 60 according to an embodiment of the present disclosure mounted on a vehicle 70. Referring to FIG. 1, a description is given of the vehicle 70 mounted with the device control system 60 according to the present embodiment. FIG. 1A is a plan view of the vehicle 70. FIG. 1B is a side view of the vehicle 70. FIG. 1C is a front view of the vehicle 70.

As illustrated in FIG. 1A, the vehicle 70 is an automobile including, for example, an object recognition device 1 to image a predetermined imaging range on the front side in the traveling direction, at the front. As will be described later, the object recognition device 1 includes imaging sections 10a and 10b to capture two images from a left field of view and a right field of view.

As illustrated in FIGs. 1A through 1C, the vehicle 70 which is an automobile, includes the device control system 60. The device control system 60 includes the object recognition device 1 mounted in a passenger compartment, which is a room space of the vehicle 70, a vehicle controller 6 (a control unit), a steering wheel 7, and a brake pedal 8.

The object recognition device 1 operates to image the traveling direction of the vehicle 70, and is mounted in the vicinity of a rearview mirror inside the front window of the vehicle 70, for example. Although details of the configuration and operation of the object recognition device 1 will be described later, the object recognition device 1 includes a main body 2 and an imaging section 10a and an imaging section 10b fixed to the main body 2. The imaging sections 10a and 10b are fixed to the main body 2 to allow imaging a subject in a traveling direction of the vehicle 70.

The vehicle controller 6 is an electronic control unit (ECU) that performs various vehicle controls based on recognition information output from the object recognition device 1. As examples of the vehicle control, the vehicle controller 6 performs a steering control to prevent an obstacle by controlling a steering system (an example of a control target) including the steering wheel 7 or a brake control to reduce the speed of the vehicle 70 or stop the vehicle 70 by controlling the brake pedal 8 (an example of the control target), based on the recognition information output from the object recognition device 1.

With the device control system 60 including the object recognition device 1 and the vehicle controller 6 performing the vehicle control such as the steering control or the brake control, the safety of drive of the vehicle 70 can increase.

The above-described object recognition device 1 according to the present disclosure is configured to capture an image of the forward view of the vehicle 70. However, the present disclosure is not limited to the configuration. Alternatively, in some embodiments, the object recognition device 1 may be configured to capture an image of the backward view or the side view of the vehicle 70. In such a case, the object recognition device 1 detects the positions of a following vehicle and person on the back of the vehicle 70 or other vehicles and people on the side of the vehicle 70. The vehicle controller 6, which has detected danger in lane changing or lane merge, performs the above-described vehicle control. Further, when having determined the existence of a collision hazard based on the recognition information regarding the obstacle on the back side of the vehicle 70 output from the objection recognition device 1, the vehicle controller 6 performs the above-described vehicle control.

Configuration of Object Recognition Device and Peripherals

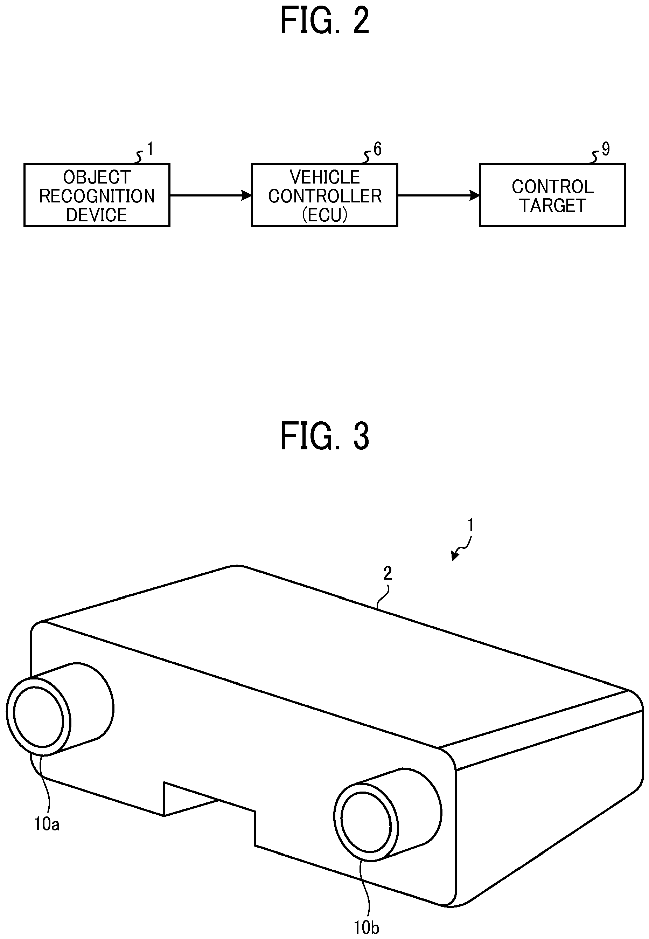

FIG. 2 is an illustration of a configuration of the object recognition device 1 and peripherals of the device control system according to an embodiment of the present disclosure. Referring to FIG. 2, a description is given of the object recognition device 1 and the peripherals of the device control system 60.

The object recognition device 1 outputs two captured images (luminance images) to the vehicle controller 6 as the ECU. The vehicle controller 6, which is mounted on the vehicle 70, comprehensively performs the electrical controls and processes of the engine and other devices of the vehicle 70. That is, as illustrated in FIG. 2, the vehicle controller 6 controls the operation of the control target 9 (for example, the above-described steering system and the brake pedal 8) to be subjected to various controls.

Configuration of Object Recognition Device

FIG. 3 is an illustration of an example of an external view of the object recognition device 1 according to an embodiment of the present disclosure. As illustrated in FIG. 3, the object recognition device 1 includes the main body 2 and imaging sections 10a and 10b fixed to the main body 2 as described above. The imaging sections 10a and 10b are composed of a pair of cylindrical cameras, arranged in parallel with each other and at the same level with respect to the main body 2. To simplify the description, the imaging section 10a and the imaging section 10b are referred to as a right camera and a left camera, respectively in FIG. 3.

Hardware Configuration of Object Recognition Device

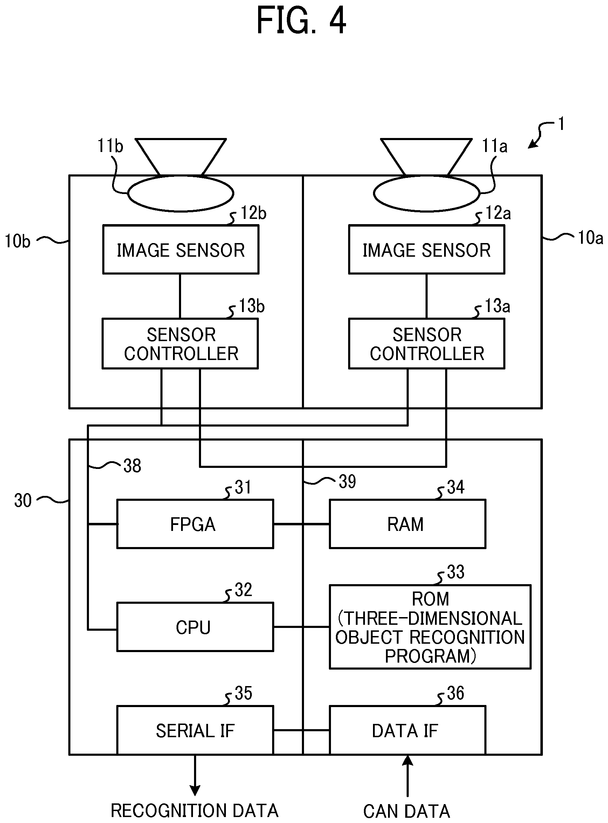

FIG. 4 is a block diagram of a hardware configuration of the object recognition device 1 according to an embodiment of the present disclosure. Referring to FIG. 4, a description is given of the hardware configuration of the object recognition device 1.

As illustrated in FIG. 4, the object recognition device 1 includes the imaging sections 10a and 10b and an image processor 30 within the main body 2 (see FIG. 3).

The imaging section 10a operates to capture an image of a subject ahead of the vehicle 70 and generate a captured image. The imaging section 10a includes an imaging lens 11a, an image sensor 12a, and a sensor controller 13a.

The imaging lens 11a is an optical element for refracting the incident light to form an image of an object on the image sensor 12a. The image sensor 12a is a semiconductor device to convert the light having entered the imaging lens 11a into an electrical image signal. The image sensor 12a is implemented by, for example, a solid-state imaging device such as a charge coupled device (CCD) or a complementary metal oxide semiconductor (CMOS). The sensor controller 13a is a device for performing, for example, the exposure control, the image-readout control, the communication with external circuits, and the control of image-data transmission in the image sensor 12a.

The imaging section 10b operates to capture an image of a subject ahead of the vehicle 70 and generate a captured image. The imaging section 10b includes an imaging lens 11b, an image sensor 12b, and a sensor controller 13b. The imaging lens 11b, the image sensor 12b, and the sensor controller 13b operate in the same manner as the imaging lens 11a, the image sensor 12a, and the sensor controller 13a, respectively. The imaging lens 11a and the imaging lens 11b are disposed to have main surfaces that are in the same plane, so that the imaging section 10a and the imaging section 10b, the right lens and the left lens, can capture an image under the same conditions.

The image processor 30 performs image processing on image data converted by the imaging sections 10a and 10b. Specifically, the image processor 30 derives a disparity value dp (an example of distance information) indicating disparity with respect to the object from two images captured by the imaging sections 10a and 10b. The image processor 30 further generates each disparity image (an example of the first information) in which a pixel defied by an x-directional position (an example of the first direction) and a y-directional position (an example of the second direction) in a captured image has a disparity value dp as a pixel value. Subsequently, the image processor 30 performs, for example, object recognition processing for an object, such as person and a vehicle, reflected in the captured image based on the disparity image, and outputs recognition data (information) representing the results of the object recognition processing to the vehicle controller 6. The image processor 30 includes a field programmable gate array (FPGA), a central processing unit (CPU) 32, a read only memory (ROM) 33, a random access memory (RAM) 34, a serial inter face (I/F) 35, a data IF 36, a serial bus line 38, and a data bus line 39. The imaging sections 10a and 10b are connected to the image processor 30 via the serial bus line 38 and the data bus line 39. The image processor 30 writes the data of the image (luminance image) captured by the imaging sections 10a and 10b in the RAM 34 via the data bus line 39. The FPGA31 and the CPU 32 transmits and receives change control data of a sensor exposure value and an image-readout parameter, and various setting data to and from the sensor controllers 13a and 13b via the serial bus line 38. In the present embodiment, the disparity image refers to information in which vertical-directional positions, horizontal-directional positions, and depth-directional positions of the object are associated with each other. Hereinafter, when the term "image" is used, the image refers to a set of information as well as an image to be displayed on, for example, a display.

The FPGA 31 is an integrated circuit to perform gamma correction and distortion correction (paralleling left and right captured images) are performed on two captured images and derive a disparity value dp to generate a disparity image, thus performing the object recognition processing on the object based on the generated disparity image. The CPU 32 controls operations of the sensor controllers 13a and 13b of the imaging sections 10a and 10b and also controls each operation of the image processing apparatus 30. The ROM 33 stores various kinds of programs such as an image processing program (a three-dimensional object recognition program) that is executed by the CPU 32 to control each operation of the image processor 30. The RAM 34 is used as a work area of the CPU 32. The serial I/F 35 is an interface for outputting the recognition information of the object, which is a processing result of the object recognition processing performed by the FPGA 31 and the CPU 32, to the vehicle controller 6. The data I/F 36 is an interface for acquiring controller area network (CAN) information, such as the speed, acceleration, steering angle, and yaw rate, of the vehicle 70.

The three-dimensional object recognition program is an example of the image processing program. The CPU 32 acquires CAN information, such as speeds, accelerations, steering angles, and yaw rates of, for example, the vehicle 70 via the data I/F 36. The CPU 32 further executes various processing, such as the object recognition processing, using data of the captured image and disparity image stored in the RAM 34 according to the three-dimensional object recognition program stored in the ROM 33, to detect (recognize) a detection target, such as a preceding vehicle.

As described above, the image processing apparatus 30 outputs the detection information (recognition information) of the detection target (recognition target) to the vehicle controller 6 via the serial I/F 35, which is used for controlling an automatic brake system and used for control of, for example, an automatic brake system or an automatic speed control system. The automatic brake system performs a brake control of the vehicle 70 using recognition information of a recognition target. The automatic speed control system performs a speed control of the vehicle 70 using recognition information of a recognition target.

Although the image processor 30 includes the FPGA 31 as an integrated circuit that executes the object recognition processing, the present disclosure is not limited to this configuration. Alternatively, the image processor 30 may include, for example, an integrated circuit such as an application specific integrated circuit (ASIC).

Further, the above-described three-dimensional object recognition program may be a file in an installable format or an executable format and may be recorded and distributed on a computer readable recording medium. The recording medium is, for example, a compact disk read only memory (CD-ROM) or a secure digital (SD) memory card.

Configurations and Functions of Function Block of Object Recognition Device

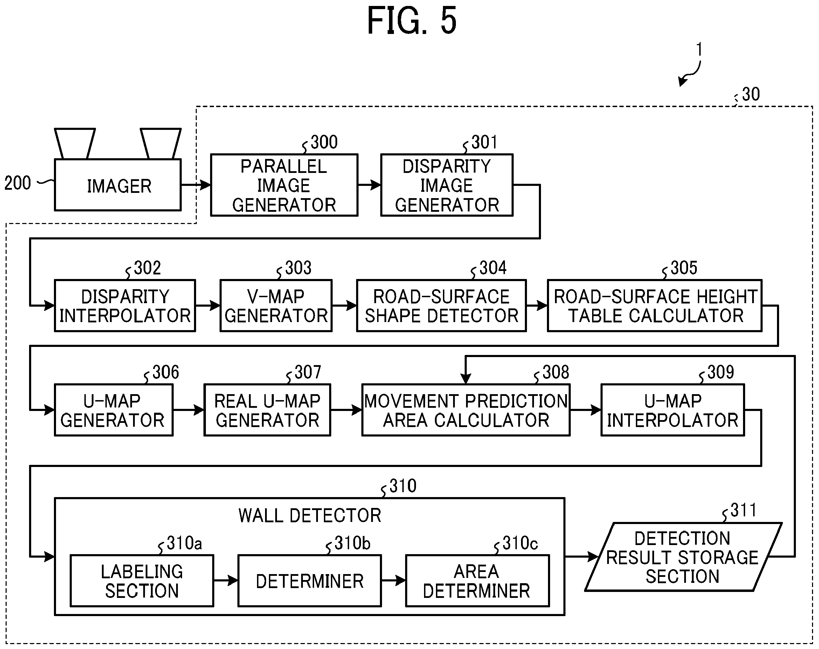

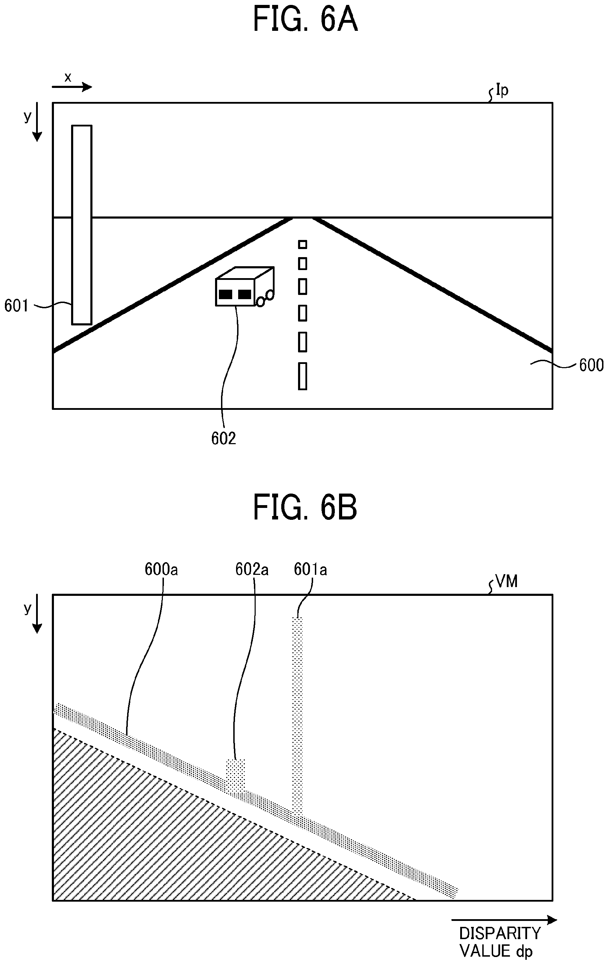

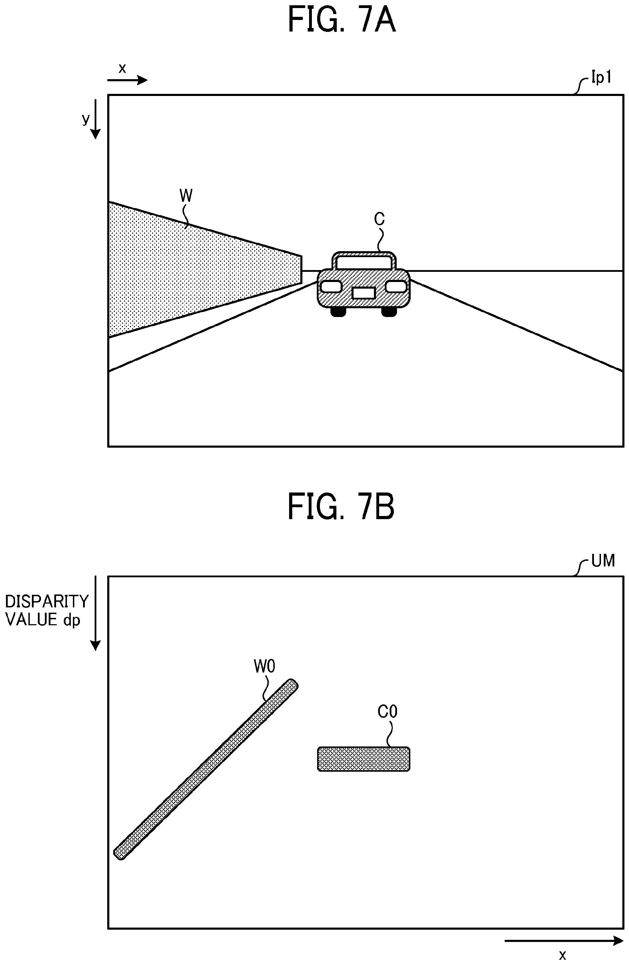

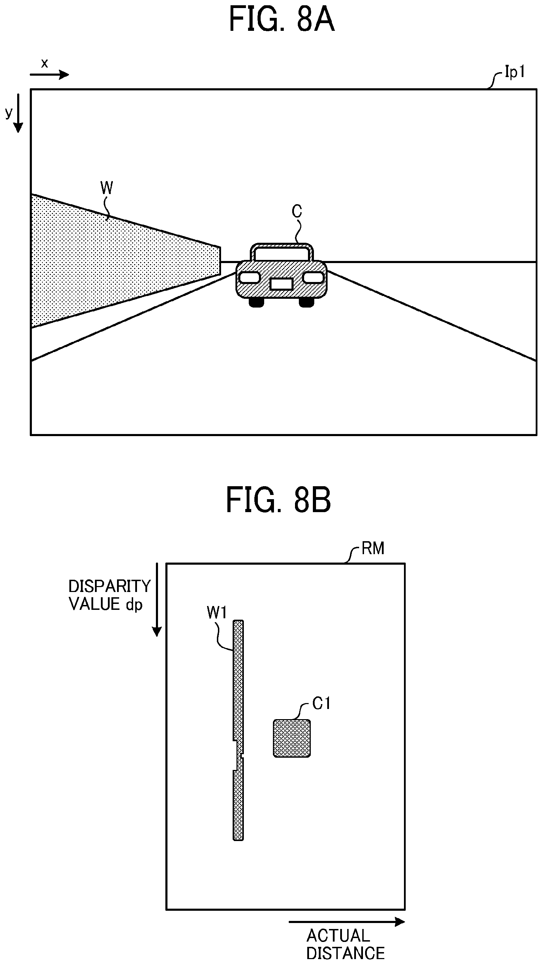

FIG. 5 is a block diagram of an example of a function block of the object recognition device 1 according to an embodiment of the present disclosure. FIG. 6A is an illustration of an example of a disparity image. FIG. 6B is an illustration of an example of a V map generated by the disparity image of FIG. 6A. FIG. 7A is an illustration of another example of a disparity image. FIG. 7B is an illustration of an example of a U map generated by the disparity image of FIG. 7A. FIG. 8A is an illustration of an example of a U map. FIG. 8B is an illustration of an example of a real U map generated by the U map of FIG. 8A. Referring to FIGs. 5 through 8, a description is given of the configuration and function of the functional block of the object recognition device 1.

As illustrated in FIG. 5, the object recognition device 1 (an example of an imaging device) includes an imaging unit 200 and an image processing apparatus 30 (an example of an information processing apparatus).

The imaging unit 200 captures an image of a subject ahead of the vehicle 70 and generates a captured image (luminance images). The imaging unit 200 is implemented by the imaging sections 10a and 10b in FIG. 4.

The image processing apparatus 30 includes a parallel image generator 300, a disparity image generator 301 (a second generation unit), a disparity interpolator 302, a V-map generator 303, a road-surface shape detector 304, a road-surface height table calculator 305, a U-map generator 306, a real U-map generator 307 (a first generation unit/ a generation unit), a movement prediction area calculator 308 (a prediction unit), a U map interpolator 309 (an interpolation unit), a wall detector 310 (an object detection unit), and a detection result storage unit 311.

The parallel image generator 300 is a functional unit to execute parallelization processing (distortion correction) on data (hereinafter simply referred to as captured images (luminance images)) of two captured images (luminance images) output from the imaging unit 200. Regarding the two luminance images output from the parallel image generator 300, the luminance image corresponding to the right camera (the imaging section 10a) is image data of a reference image Ia (herein after referred to simply as the reference image Ia), and the luminance image corresponding to the left camera (the imaging section 10b) is image data of a comparison image Ib (hereinafter, referred to simply as the comparison image Ib) in the present embodiment.

The disparity image generator 301 is a functional unit to generate image data of a disparity image having an pixel value corresponding to the derived disparity value dp (hereinafter, referred to simply as a disparity image), based on the same disparity value dp derived by block matching from the reference image Ia and the comparison image Ib.

The disparity interpolator 302 is a functional unit to perform interpolation processing (for example, linear interpolation) on the disparity image generated by the disparity image generator 301.

The V-map generator 303 is a functional unit to generate a V-Disparity map, i.e., a V map VM as illustrated in FIG. 6B, from the reference image Ia (or the comparison image Ib) and the disparity image output from the disparity interpolator 302, which is used for detecting a road surface. In the present embodiment, the V-Disparity map (hereinafter referred to as a V map) is a two-dimensional histogram in which the vertical axis is the y axis of the reference image Ia and the horizontal axis is the disparity value dp (or distance) of the disparity image, representing the frequency distribution of the disparity value dp. In other words, the V map is information in which the vertical-directional positions and the depth-directional positions of an object are associated with each other. The pixel value of each pixel in the V map is the frequency of the disparity value dp. That is, the pixel value of the V map is the frequency of the disparity value dp corresponding to each y-coordinate. In the disparity image Ip illustrated in FIG. 6A, for example, road surface 600, a utility pole 601, and a car 602 are displayed. In the V map VM in FIG. 6B, the road surface 600 of the disparity image Ip in FIG. 6A corresponds to the road surface portion 600a, the utility pole 601 corresponds to a utility pole portion 601a, and the car 602 corresponds to the car portion 602a.

The road-surface shape detector 304 is a functional unit to perform linear approximation processing on high-frequency points on the V map that represents sets of the disparity values corresponding to the road surface and the y-directional positions, i.e., the feature that the disparity value decreases in the upward direction of the disparity image Ip, from the V map generated by the V-map generator 303. In other words, the above-described linear approximation processing of the road-surface shape detector 304 corresponds to the process for detecting the road surface portion 600a in the V map VM. When the road surface is flat, one straight line is sufficient to precisely perform the linear approximation. However, when the road surface has a slope change in the traveling direction of the vehicle 70, for example, the image processing apparatus 30 may divide the V map VM into a plurality of sections in the direction of the disparity value dp, and obtain a road surface for each section by linearly approximating each section.

The road-surface height table calculator 305 is a functional unit to calculate a height of the road surface (a height relative to the road surface portion immediately below a vehicle) and tabulates the calculated heights. Based on the information of the approximate straight line on the V map generated by the road-surface shape detector 304, the image processing apparatus 30 obtains the distance to each road surface portion displayed in each line area (at each position in the vertical direction of the captured image (the reference image Ia) on the image. When a virtual plane is obtained by extending the road surface portion immediately below the vehicle 70 to the front in the traveling direction of the vehicle 70 such that the same road surface portion is parallel to the virtual plane, which line area to display each surface portion of the virtual plane in the traveling direction of the vehicle 70 is preliminarily determined. Such a virtual plane (the reference road surface) is represented by a straight line (the reference straight line) on the V map. By comparing the approximate straight line output from the road-surface shape detector 304 with the reference straight line, the road-surface height table calculator 305 obtains the height of each road surface portion in the front of the vehicle 70. In other words, the road-surface height table calculator 305 obtains the height of a road surface portion included in the front area of the vehicle 70, i.e., the distance obtained from the disparity value corresponding to the y-axis position on the approximate straight line output from the road-surface shape detector 304. Subsequently, the road-surface height table calculator 305 tabulates the heights of the road-surface portions obtained from the approximate straight line, within a desired disparity range. Note that, with the height of a road surface, the height of an object can be obtained by the method known in the art. For example, with the formula that expresses the road surface, y-coordinate is defined as y0 where the disparity value dp is 0. In this case, the y-coordinate of y0 denotes the height of the road surface. For example, when the disparity is dp and the y-coordinate is ya, ya - y0 denotes the height from the surface road when the disparity value is dp. The height H from the road surface of the above-mentioned coordinate (dp, ya) can be obtained from the equation of $H = \{z*(ya-y0)\}/f$. In this equation, "z" denotes the distance ($z = BF/(dp - offset)$) obtained from the disparity value dp, and "f" is the focal length of the imaging sections 10a and 10b expressed by the same unit of (ya - y0). In the expression "$z = BF/(dp - offset)$", "BF" is a value obtained by multiplying the baseline length B of the imaging sections 10a and 10b by the focal length f, and "offset" is a disparity value when the imaging sections 10a and 10b capture images of an object at infinity.

The U-map generator 306 is a functional unit to generate a U-Disparity map as illustrated in FIG. 7B, i.e., a U map UM to recognize an object, using only information above the road surfaces detected and displayed in the V map VM, i.e., the information corresponding to the utility pole 601 and the car 602 in the disparity image Ip in FIG. 6A. The U-map generator 306 uses the information regarding the height of the road surface calculated by the road-surface height table calculator 305, thereby to generate such a U map UM. In the present embodiment, the U-Disparity map (hereinafter, referred to simply as a U map) is a two-dimensional histogram in which the horizontal axis is the x axis of the reference image Ia and the vertical axis is the disparity value dp (or distance) of the disparity image, representing the frequency distribution of the disparity value dp. That is, the U map is information in which the vertical-directional positions of the object and the depth-directional positions are associated with each other. The pixel value of the pixel in the U map is the frequency of the disparity value dp. In the disparity image Ip1 illustrated in FIG. 7A, for example, a vehicle C and a wall W are displayed. The vehicle C of the disparity image Ip1 corresponds to an area C0 and the wall W corresponds to an area W0 in the U map UM.

The real U-map generator 307 is a functional unit to generate a real U-Disparity map, i.e., a real U map RM (an example of second information, two-dimensional distribution information) illustrated in FIG. 8B in which the horizontal axis is real distance converted from the U map UM in FIG. 7B generated by the U-map generator 306. In the present embodiment, the real U-Disparity map (hereinafter, referred to as the real U map) is a two-dimensional histogram in which the horizontal axis represents the actual distance in the direction from the imaging section 10b (the left camera) to the imaging section 10a (the right camera), and the vertical axis represents the disparity value dp of the disparity image (or a distance in the depth direction (a third direction) converted from the disparity value dp). The real U map is merely a map in which the scale of the U map is changed, and is thus the same as the information in which the horizontal-directional positions and the depth-directional positions of the object are associated with each other. In other words, the real U map is a map (bird's-eye image and an overview image) of the real space viewed from above. The pixel value of a pixel in such a real U map is the frequency of the disparity value dp (an example of an element value). The vehicle C of the disparity image Ip1 in FIG. 8A corresponds to the area C1 in the real U map RM, and the wall W corresponds to the area W1 in the real U map RM. In the real U map RM obtained from the disparity image Ip1 of FIG. 8A, the wall W is expressed by the vertical linear area W1 and the vehicle C is expressed by the area C1 of the back shape of the vehicle C.

Specifically, the real U-map generator 307 does not reduce the number of pixels of the image of a distant object (with a low disparity value dp) because the distant object is small, providing little information and the resolution of the distance is small. Instead, the real U-map generator 307 reduces the number of pixels for a near object because the near object is enlarged to be displayed, providing more information and the resolution of the distance is large. Thus, the real U-map generator 307 generates a real U map RM corresponding to a plane (panoramic) view. In addition to generating the real U map RM from the U map UM, the real U map generator 307 may also generate a real U map RM directly from a disparity image.

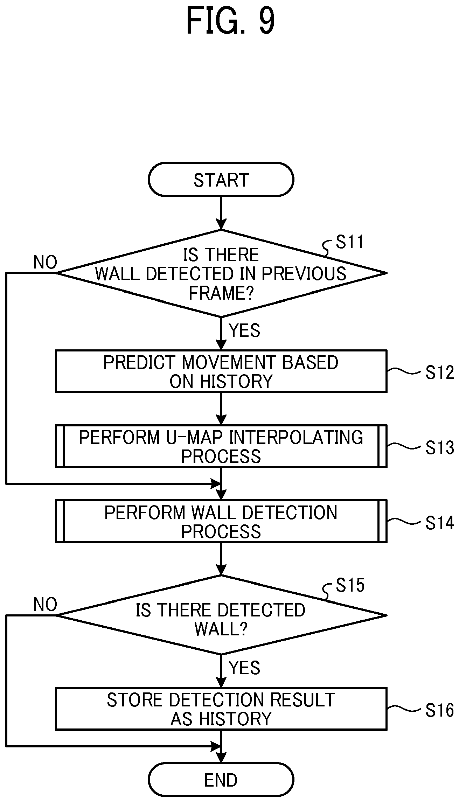

The movement prediction area calculator 308 calculates which area of a current frame an object detected in the previous frame exists in, using the information (history) of the detection result of the previous frame. Accordingly, the movement prediction area calculator 308 defines the calculated area as a movement prediction area. In this case, the previous frame is a frame preceding a current frame to be subjected to the current image processing. That is, the previous frame includes previous (preceding) two captured images (luminance images), and a disparity image, a V map, a U map and a real U map corresponding to the two captured images. A detailed description will be given of a specific example and a calculation method of the movement prediction area will be described later with reference to FIGs. 9 to 11.

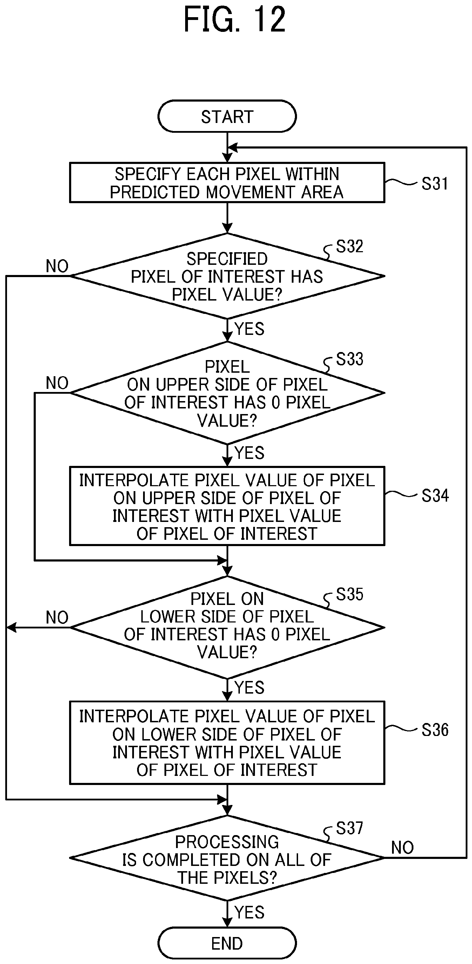

When there is information (history) of the detection result in the previous frame, the U-map interpolator 309 interpolates the real U map so as to advantageously detect a wall as an object. This is because the object detected in the previous frame is more likely to be detected again in the movement prediction area calculated by the movement prediction area calculator 308. A detailed description of the interpolation process of the real U map by the U-map interpolator 309 will be given later, referring to FIGs. 12 to 14.

The wall detector 310 performs wall detection processing to detect a wall as an object in the real U map interpolated by the U-map interpolator 309. The wall detector 310 includes a labeling section 310a (a continuous area detection unit), a determiner 310b as a determination unit, and an area determiner 310c.

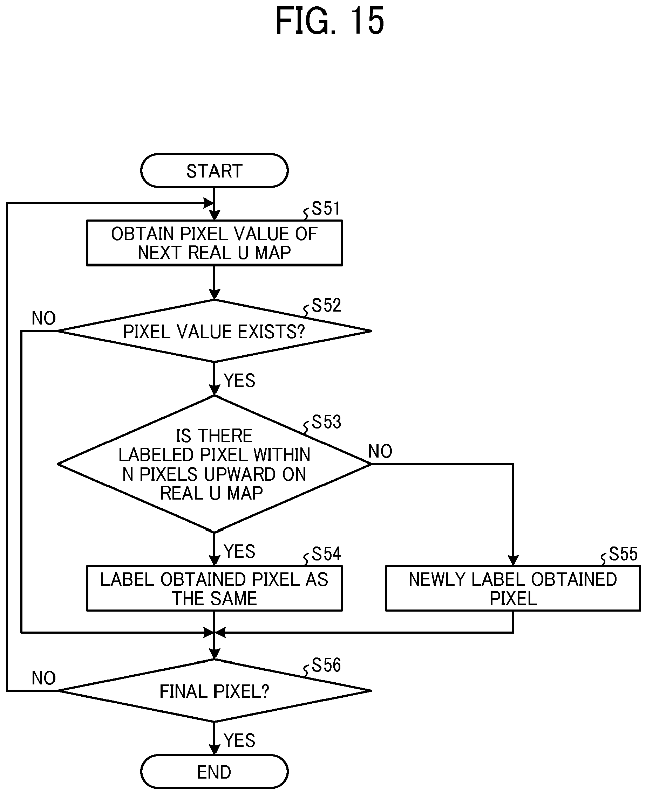

The labeling section 310a performs a labeling process for detecting a continuous-pixel area in which continuous pixels lie in the direction of the disparity value dp of the real U map interpolated by the U-map interpolator 309, and labeling the detected continuous-pixel area. A detailed description of the labeling process of the labeling section 310a is given later, referring to FIGs. 15 to 17.

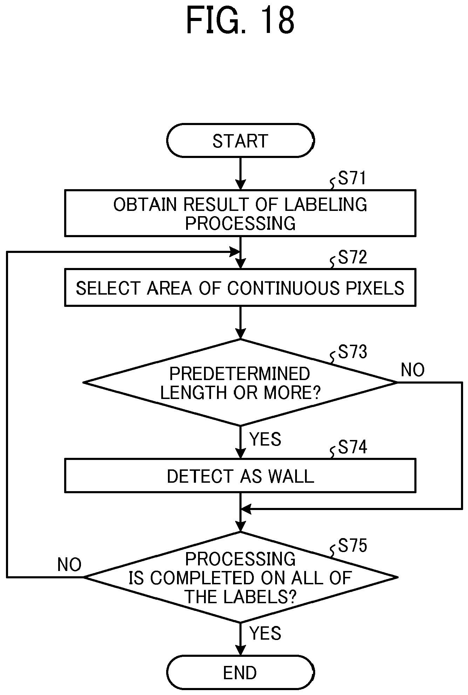

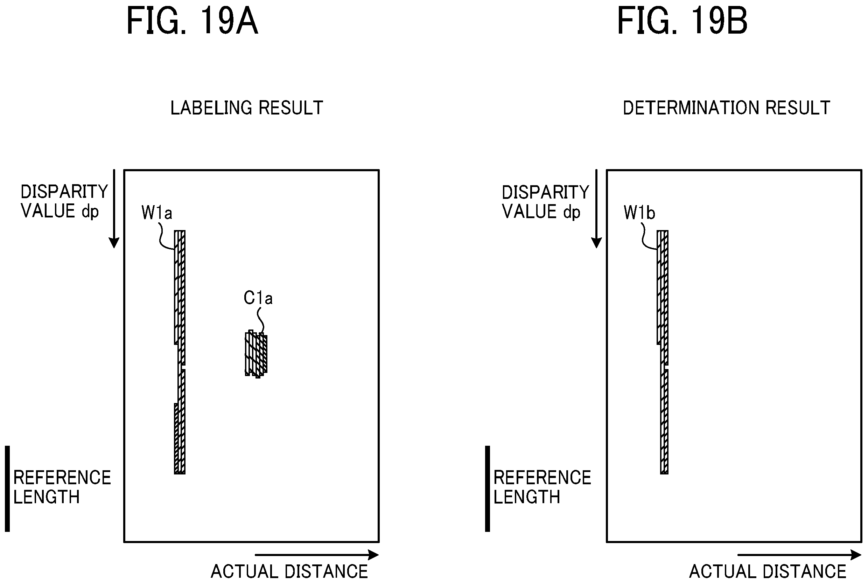

The determiner 310b determines whether the continuous-pixel area indicates a continuous object, e.g., a wall, based on the length of the continuous-pixel area labeled by the labeling section 310a that extends in the direction of the disparity value dp. Specifically, when the length of the continuous-pixel area is equal to or longer than a predetermined length (a predetermined number of pixels or more), the determiner 310b determines that the object corresponding to the continuous-pixel area is a continuous object (for example, a wall). That is, when the determiner 310b determines that the continuous-pixel area detected by the labeling section 310a indicates a continuous object, a continuous object is detected. A detailed description of the determination processing (wall determination processing) of the determiner 310b is given later, referring to FIGs. 18 and 19.

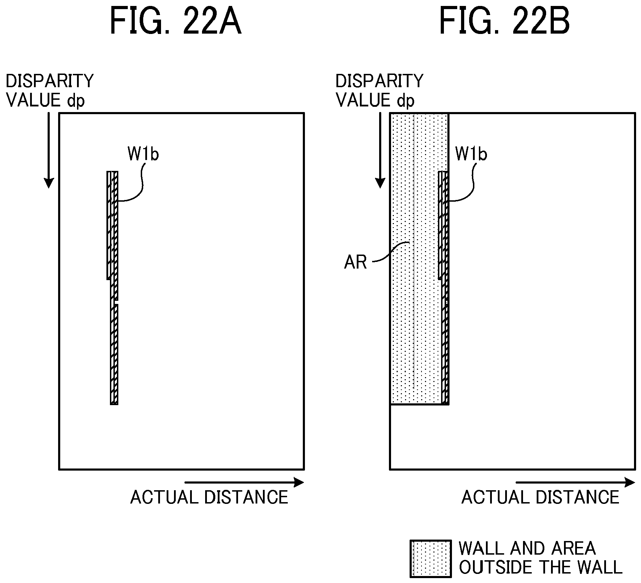

When the determiner 310b determines that the continuous-pixel area indicates a continuous object, the area determiner 310c determines an area to detect other objects such as discontinuous objects in the real U map. That is, the area determiner 310c performs an area determination process. A detailed description of the area determination process of the area determiner 310c is given later, referring to FIG. 22.

The detection result storage section 311 stores, as recognition information, the detection result of the continuous object, such a a wall, by the wall detector 310. Note that thee detection result storage section 311 may store not only the detection results of continuous objects such as walls but also the detection results of non-continuous objects, e.g., people or cars, as the recognition information. The detection result storage section 311 is implemented by the RAM 34 in FIG. 4.

The parallel image generator 300, the disparity image generator 301, the disparity interpolator 302, the V map generator 303, the road-surface shape detector 304, the road-surface height table calculator 305, the U-map generator 306, the real U-map generator 307, the movement prediction area calculator 308, the U-map interpolator 309, and the labeling section 310a the determiner 310b, and the area determiner 310c of the wall detector 310 in FIG. 5 are implemented by the FPGA 31 in FIG. 4. Note that some or all of the parallel image generator 300, the disparity image generator 301, the disparity interpolator 302, the V map generator 303, the road-surface shape detector 304, the road-surface height table calculator 305, the U-map generator 306, the real U-map generator 307, the movement prediction area calculator 308, the U-map interpolator 309, and the labeling section 310a the determiner 310b, and the area determiner 310c of the wall detector 31 are not implemented by the FPGA as a hardware circuit but are implemented by the CPU 32 executing a program stored in the ROM 33.

Note that, the parallel image generator 300, the disparity image generator 301, the disparity interpolator 302, the V map generator 303, the road-surface shape detector 304, the road-surface height table calculator 305, the U-map generator 306, the real U-map generator 307, the movement prediction area calculator 308, the U-map interpolator 309, and the labeling section 310a the determiner 310b, and the area determiner 310c of the wall detector 31 all schematically represent the functions. The present disclosure is not limited to such a configuration. For example, the plurality of individual functional units in the image processing apparatus 30 in FIG. 5 may be one functional unit. For another example, in the image processing apparatus 30 of FIG. 5, the function of one functional unit may be divided into a plurality of functions, and a plurality of functional units may have the plurality of functions, respectively.

Wall Detection Processing Based on Movement Prediction by Object Recognition Device

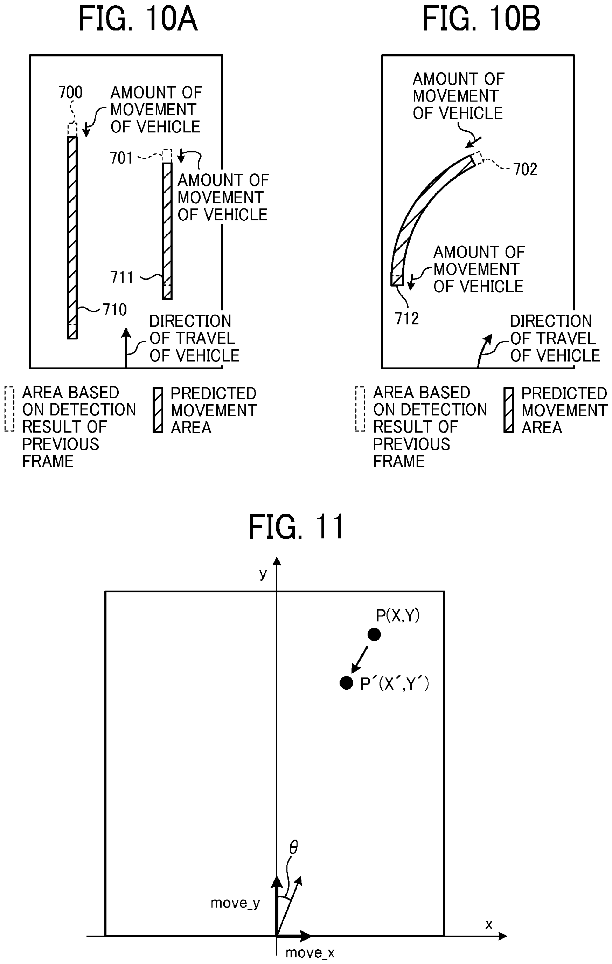

FIG. 9 is a flowchart of an example of the operation of the wall detection processing based on movement prediction of the object recognition device 1 according to an embodiment of the present disclosure. FIGs. 10A and 10B are illustrations of examples of the movement prediction area based on the detection history. FIG. 11 is an illustration of the movement prediction position calculated based on the detection history. Referring to FIGs. 9 to 11, a description is given of the wall detection processing based on the movement prediction of the object recognition device 1 according to the present embodiment.

Step S11

The movement prediction area calculator 308 of the image processing apparatus 30 determines whether a wall is detected based on the previous frame, i.e., whether the recognition information including a wall corresponding to the previous frame is present, referring to the detection result storage section 311. When the recognition information including the detection result of the wall corresponding to the previous frame is present (Yes in step S11), the process proceeds to step S12. When a negative determination is made (No in step S11), the process proceeds to step S14.

Step S12

When the recognition information including the detection result of the wall corresponding to the previous frame is present, the movement prediction area calculator 308 calculates which area of the current frame the object detected in the previous frame is present in, and obtains the calculated area as the movement prediction area, using the recognition information (history) of the previous frame.

For example, when the vehicle 70 travels straight at a constant speed of 40 kilometer (km)/ hour (h), i.e., 11.1 meter (m)/ second (sec), including the imaging unit 200 with 10 frames per second (fps), the wall detected in the previous frame is predicted to be at a position shifted backward by 1.1 m in the current frame. As illustrated in FIG. 10A for example, when areas 700 and 701 are the areas of the walls detected in the previous frame, areas 710 and 711 are the movement prediction area moved backward relative to the traveling direction of the vehicle 70, from which the walls are predicted to be detected in the current frame.

When a vehicle rotates, the movement prediction area calculator 308 calculates the movement prediction area, using the amount of movement and rotation angle of the vehicle. For example, the method for calculating the movement of a certain point is described, referring to FIG. 11. The object positioned at a point P (X, Y) in the previous frame makes a turn by the rotation angle $\theta$, and moves in the horizontal direction (the X direction) by the amount of movement move_x and in the vertical direction (the Y direction) by the amount of movement move_y, between the previous frame and the current frame. In this case, the position Pa (Xa, Ya) of the object in the current frame is obtained by formulas (1) and (2) below:

[Formula 1]

$$Xa = (\cos(\theta)*X - \sin(\theta)*Y) - move\_x \quad (1);$$

and

$$Ya = (\sin(\theta)*X + \cos(\theta)*Y) - move\_y \quad (2).$$

In the real U map as illustrated in FIG. 10B, an area 702 refers to the area of the wall detected in the previous frame. In this case, a movement prediction area 712 is obtained by the above-described formulas (1) and (2). The movement prediction area 712 is an area in which the wall is predicted to be detected in the current frame after the vehicle 70 makes a turn.

The process proceeds to step S13.

Step S13

When the recognition information including the detection result of the wall corresponding to the previous frame is present, the U-map interpolator 309 of the image processing apparatus 30 interpolates the real U map to advantageously detect a wall as an object. This is because the object detected in the previous frame is more likely to be detected again in the movement prediction area calculated by the movement prediction area calculator 308. A detailed description of the interpolation process of the real U map by the U-map interpolator 309 will be given later, referring to FIGs. 12 to 14. The process proceeds to step S14.

Step S14

The wall detector 310 of the image processing apparatus 30 executes the wall detection processing for detecting a wall as an object in the real U map interpolated by the U-map interpolation unit 309. The wall detection processing performed by the wall detector 310 is implemented by the labeling processing by the labeling section 310a, the determination processing (wall determination processing) by the determiner 310b, and the area determination processing by the area determiner 310c. A detailed description of the above-described processing is given later. The process proceeds to step S15.

Step S15

When the wall detector 310 detects a wall in the wall detection processing (Yes in step S15), the process proceeds to step S16. When the wall detector 310 fails to detect any wall (No in step S15), the processing ends.

Step S16

The wall detector 310 stores, in the detection result storage section 311, the recognition information including the detection result of the wall in the wall detection processing.

The object recognition device 1 performs the wall detection processing based on movement prediction, with the above-described steps S11 through S16.

Interpolation Processing for Real U Map

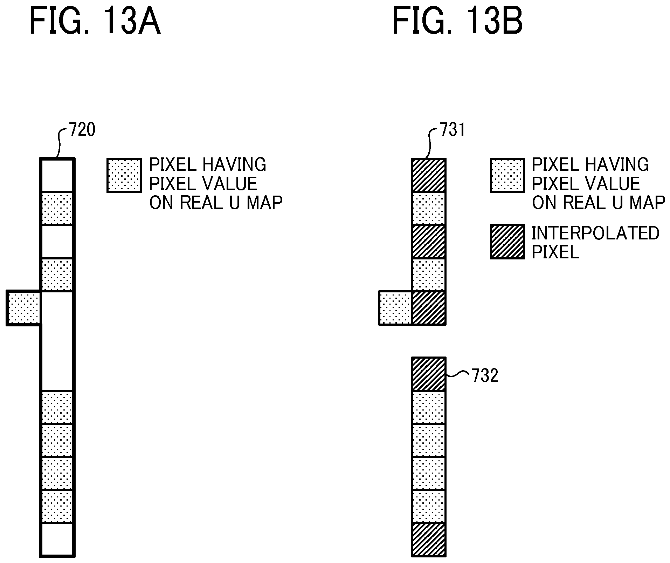

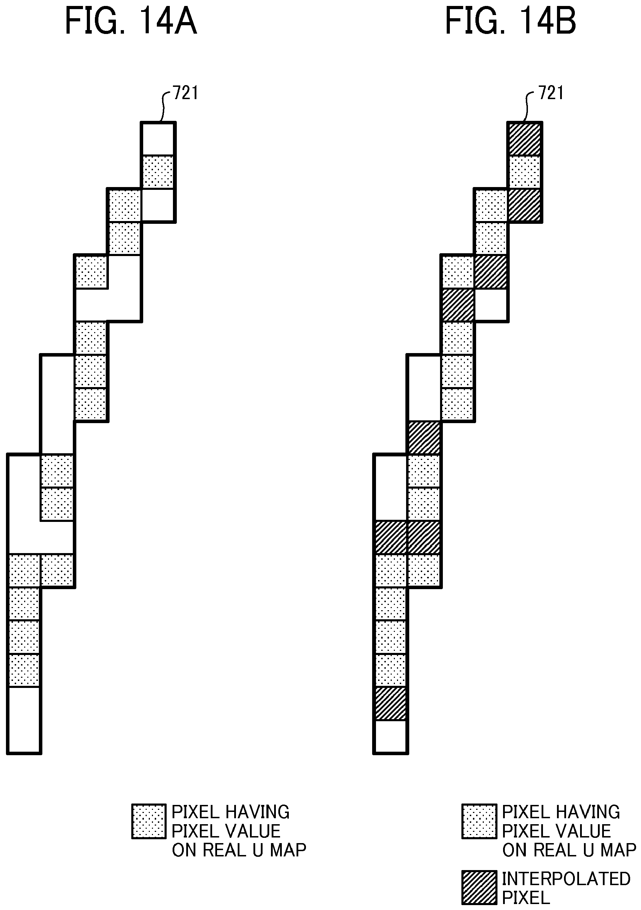

FIG. 12 is a flowchart of an example of the operation of the wall detection processing for the real U map performed by the object recognition device 1 according to an embodiment of the present disclosure. FIGs. 13A and 13B are illustration of interpolation of a linear wall performed by the object recognition device 1 according to an embodiment of the present disclosure. FIGs. 14A and 14B are illustrations of interpolation of a linear wall performed by the object recognition device 1 according to an embodiment. Referring to FIGs. 12 through 14, a description is given of the interpolation processing for the real U map performed by the U-map interpolator 309 of the object recognition device 1 according to the present embodiment.

Step S31

The U-map interpolator2r 309 of the image processing apparatus 30 specifies a certain pixel from the pixels constituting the movement prediction area in the current frame calculated by the movement prediction area calculator 308. The process proceeds to step S32.

Step S32

The U-map interpolator 309 determines whether the specified pixel (pixel of interest) has a pixel value (frequency value). When the specified pixel has a pixel value (Yes in step S32), the process proceeds to step S33. When the specified pixel has no pixel value (No in step S32), the process proceeds to step S37.

Step S33

When the specified pixel (pixel of interest) has a pixel value, the U-map interpolator 309 determines whether the pixel value of the pixel on the immediately upper side (the rear side in the depth direction) of the pixel of interest is 0. When the pixel value is 0 (Yes in S33), the process proceeds to step S34. When the pixel value is not 0 (No in step S33), the process proceeds to step S35. In the present embodiment, whether the pixel value is 0 is used as a determination reference. Alternatively, whether the pixel value is less than or equal to a predetermined value may be used as a determination reference. When such a determination reference is satisfied, the U-map interpolator 309 determines that the pixels are not continuous in the depth direction.

Step S34

The U-map interpolator 309 interpolates the pixel value of the pixel on the immediately upper side of the pixel of interest, with the pixel value of the pixel of interest. Subsequently, the process proceeds to step S35.

Step S35

The U-map interpolator 309 determines whether the pixel value of the pixel on the immediately lower side (the front side in the depth direction) of the pixel of interest is 0. When the pixel value is 0 (Yes in S35), the process proceeds to S36. When the pixel value is not 0 (No in step S35), the process proceeds to step S37.

Step S36

The U-map interpolator 309 interpolates the pixel value of the pixel on the immediately lower side of the pixel of interest, with the pixel value of the pixel of interest. Subsequently, the process proceeds to step S37.

Step S37

The U-map interpolator 309 determines whether the processing has been completed for all the pixels in the movement prediction area. When the processing is not completed (No in step S37), the process returns to step S31. When the processing is completed (Yes in step S37), the interpolation processing for the target movement prediction area ends.

With the above-described steps S31 to S37, the U-map interpolator 309 of the object recognition device 1 executes the interpolation processing for the real U map. With this interpolation processing, pixels having no pixel value comes to have pixel values in the current frame, and continuity in the depth direction increases, thus increasing the possibility to detect the pixels as a wall in the following wall detection processing.

The interpolation process in FIG. 12 allows interpolating, for example, the discontinuous pixels, which are intermittently spaced, within the movement prediction area 720 in FIG. 13A as illustrated in FIG. 13B. In the example of FIG. 13B, two sets of continuous pixels having pixel values (areas 731 and 732) are obtained by interpolating the pixels within the movement prediction area 720 in FIG. 13A.

The movement prediction area 721 in FIG. 14A has a curved shape as a curved wall is detected in the previous frame. The movement prediction area 721 includes discontinuous pixels, which are intermittently spaced, as illustrated in FIG. 14A. Even such a movement prediction area 721 is subjected to the interpolation processing in FIG. 12, and thereby the interpolated pixels are obtained as illustrated in FIG. 14B.

Labeling Processing of Wall Detector

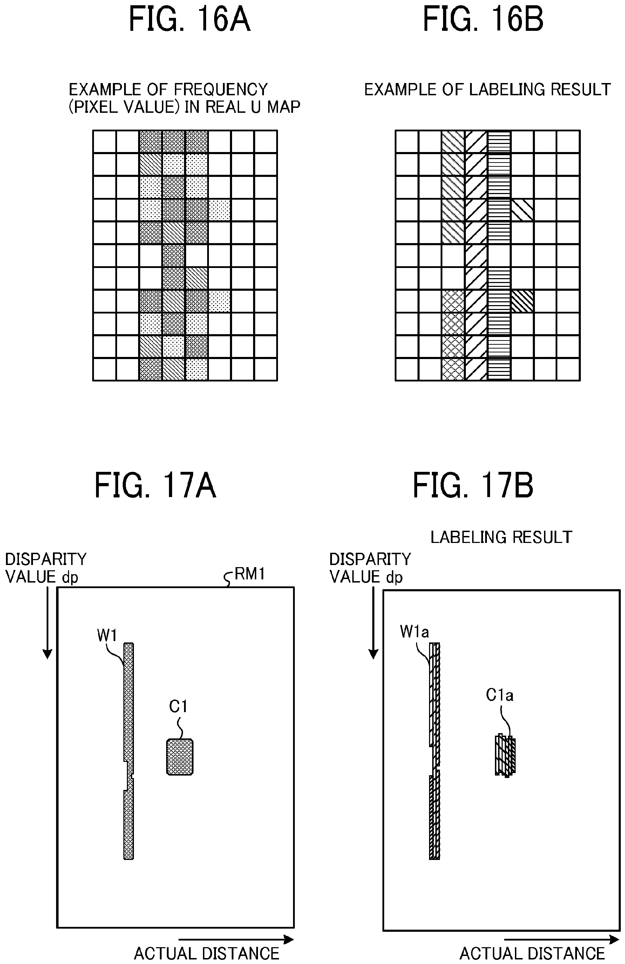

FIG. 15 is a flowchart of an example of the operation of the labeling processing of the labeling section 310a of the wall detector 310 of the object recognition apparatus 1 according to an embodiment of the present disclosure. FIGs. 16A and 16B are illustrations of the labeling processing of the labeling section 310a of the wall detector 310 of the object recognition device 1 according to an embodiment of the present disclosure. FIGs. 17A and 17B are illustrations of the labeling processing of the labeling section 310a of the wall detector 310 of the object recognition device 1 according to an embodiment of the present disclosure. The following describes the labeling processing of the labeling section 310a of the wall detector 310 according to the present embodiment, referring to FIGs. 15 through 17.

Step S51

The labeling section 310a of the wall detector 310 of the image processing apparatus 30 first obtains a pixel value of a specific pixel to be subjected to the labeling processing in the real U map. When the processes of steps S52 through S56 to be described below for the specific pixel are completed, the labeling section 310a obtains a pixel value of the next pixel of the specific pixel. Subsequently, the process proceeds to step S52.

Step S52

The labeling section 310a determines whether the obtained pixel value of the pixel is present. When the pixel value is present (Yes in step S52), the process proceeds to step S53. When the pixel value is absent (No in step S52), the process proceeds to step S56.

Step S53

The labeling section 310a determines whether a labeled pixel is present within n pixels in the upward direction from the pixel of the obtained pixel value on the real U map. In this case, "n" refers to the permissible number of pixels for considering that pixels are continuous even if the pixels are separated from each other. When the labeled pixel is present (Yes in step S53), the process proceeds to step S54. When the labeled pixel is absent (No in step S53), the process proceeds to step S55.

Step S54

When having determined that the labeled pixel is present within the n pixels in the upward direction from the specific pixel of the obtained pixel value on the real U map, the labeling section 310a labels the pixel of the obtained pixel value with the same as the labeled pixel. Subsequently, the process proceeds to step S56.

Step S55

When having determined that any labeled pixel is absent within the n pixels in the upward direction from the pixel of the obtained pixel value on the real U map, the labeling section 310a newly labels the pixel of the obtained pixel value. Subsequently, the process proceeds to step S56.

Step S56

The labeling section 310a determines whether the obtained pixel is final in the real U map. When the obtained pixel is not final (No in step S56), the process returns to step S51. When the obtained pixel is final (Yes in step S56), the labeling process ends.
With the processes in step S51 through S56, the labeling section 310a of the wall detector 310 performs the labeling processing.
FIGs. 16A, 16B, 17A, and 17B are illustrations of the labeling processing of the labeling section 310a. In any known labeling processing, a determination is made regarding whether pixels are adjacent to each other in the vicinity of 8 or 4, and a labeling process is performed. In the labeling processing according to at least one embodiment of the preset disclosure, the labeling section 310a determines whether pixels are continuous along the vertical direction (the depth direction, the direction of disparity value dp) of the real U map, thereby to detect a continuous pixel area in which the pixels are continuous in the depth direction, thus performing a labeling process. Even if there is a gap between the pixels in the depth direction, the continuity in the depth direction can be enhanced by determining the continuity of pixels by applying, for example, the above-described permissible pixel number n.
FIGs. 16A and 16B are illustrations of an example of the labeling process for performing labeling in the depth direction. FIG. 16A is an illustration of an example of a pixel value in a specified area in the real U map prior to the labeling processing. FIG. 16B is an illustration of the result of the labeling processing. In FIGs. 16A and 16B, the permissible pixel number n is 1. Accordingly, in the real U map of FIG. 16A, the pixels in the fifth column from the left are labeled as the same, and the sets of pixels in the third column from the left are two pixels apart from each other (there are two pixels between the two sets of pixels) so that the sets of pixels are distinctively labeled. In such a manner, six sets of pixels that represent the frequency of the disparity value dp are distinctively labeled as illustrated in FIG. 16B.
The real U map RM1 in FIG. 17A includes an area W1 with a long length in the depth direction, looking like a wall, and an area C1 with a short length in the depth direction, looking like a car. With the labeling processing performed on the real U map RM1, the area W1 constitutes a labeling area W1a in which a plurality of wall-like areas vertically elongated in the depth direction are distinctively labeled, and the area C1 constitutes a labeling area C1a in which car-like areas vertically shortened in the depth direction are distinctively labeled.

Wall Determination Processing of Wall detector

FIG. 18 is a flowchart of an example of the operation of the wall determination processing of the determiner 310b of the wall detector 310 of the object recognition apparatus 1 according to at least one embodiment of the present disclosure. FIGs. 19A and 19B are illustrations of the wall determination processing of the wall determiner 310b of the object recognition device 1 according to at least one embodiment of the present disclosure. The following describes the wall determination processing of the determiner 310b of the wall determiner 310 according to the present embodiment.

Step S71

The determiner 310b of the wall determiner 310 of the image processing apparatus 30 obtains the labeling result of the labeling section 310a with respect to the continuous-pixel area in the depth direction. Subsequently, the process proceeds to step S72.

Step S 72

The determiner 310b selects any particular labeled continuous-pixel area from distinctively labeled continuous-pixel areas, based on the labeling result obtained in step S72. Subsequently, the process proceeds to step S73.

Step S73

The determiner 310b determines whether the selected particular labeled continuous-pixel area has a length longer than or equal to a predetermined length (a reference length as a threshold value) in the depth direction. When the selected particular labeled continuous-pixel area has a length longer than or equal to the reference length (Yes in step S73), the process proceeds to step S74. When the selected particular labeled continuous-pixel area has a length shorter than the reference length (No in step S73), the process proceeds to step S75.

Step S 74

When having determined that the selected particular labeled continuous-pixel area has a length longer than or equal to the reference length in the depth direction, the determiner 310b detects the continuous-pixel area as a wall. Subsequently, the determiner 310b stores information (for example, positions and size of the wall) regarding the object, i.e., the detected wall as recognition information in the detection result storage section 311.
For example, the labeling result of FIG. 19A indicates the labeling W1a and the labeling area C1a each including the distinctively labeled continuous-pixel areas. With respect to the distinctively labeled continuous-pixel areas constituting the labeling areas W1a and C1a, the determiner 310b determines regarding whether each labeled continuous-pixel area has a length longer than or equal to the reference length. The determiner 310b displays only the labeled continuous-pixel areas determined to be longer than the reference length and thereby detected as a wall, in the determination result of FIG. 19B. As illustrated in FIG. 19B for example, all of the continuous-pixel areas constituting the labeling are C1a are determined to be shorter than the reference length, and thereby not detected as walls. Thus, the labeling area C1a is not displayed in the determination result of FIG. 19B. In contrast, among the continuous-pixel areas constituting the labeling area W1a, the continuous-pixel areas determined to be longer than or equal to the reference length is detected as a wall, and are the labeling area W1b constituted by the continuous-pixel areas detected as walls is displayed in the determination result of FIG. 19B.
Then, the process proceeds to step S75.

Step S 75

The determiner 310b determines whether the processes in steps S72 to S74 have been completed for all the labeled continuous-pixel areas. When the processes are not completed (No in step S75), the process returns to step S72. When the processes are completed (Yes in step S75), the wall determination processing ends.
With the processes in steps S71 through S75, the determiner 310b of the wall detector 310 performs the labeling processing.

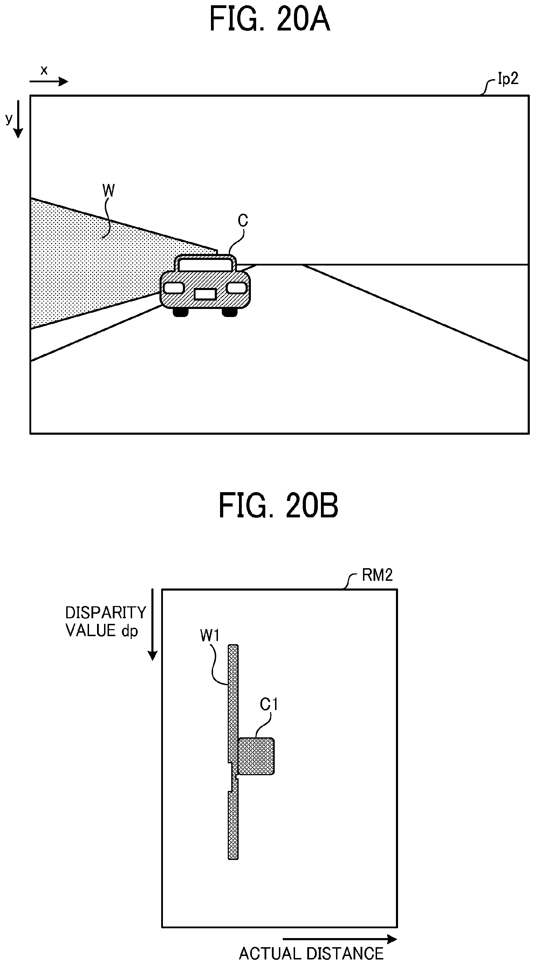

FIGs. 20A and 20B are illustrations of the processing operations of the labeling section 310a and the determiner 310b of the wall detector 310c that are effective for walls. With reference to FIGs. 20A and 20B, a description is given that the processing operations of the labeling section 310a and the determiner 310b of the wall detector 310c are effective for detecting walls.
In a disparity image Ip2 illustrated in FIG. 20A, a vehicle C is traveling close a wall W. In such a case, when the real U map RM 2 in FIG. 20B is generated from the disparity image Ip2, the object near the wall (the vehicle in the present embodiment) might be completely adjacent to the wall, particularly when the resolution of the actual distance in the horizontal axis is low. In the real U map RM 2 in FIG. 20B for example, the area C1 corresponding to the vehicle C is completely adjacent to the area W1 corresponding to the wall W. However, even in such a case, the labeling section 310a labels a continuous-pixel area in the depth direction for each column, and the determiner 310b performs the wall determination processing for each column using the reference length. Thus, the wall can be detected.

Area Determination Processing of Wall Detector

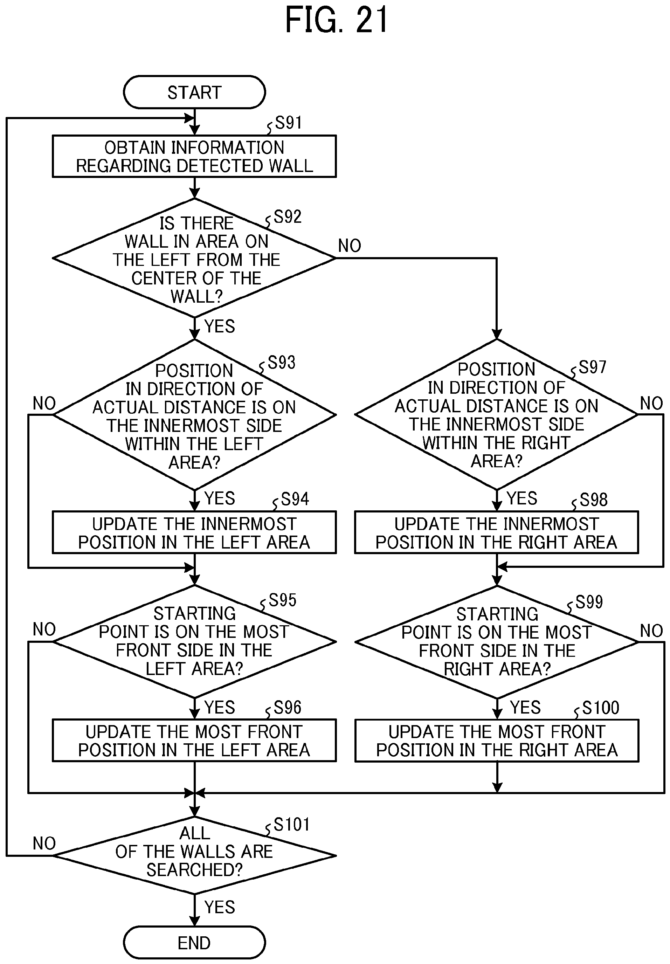

FIG. 21 is a flowchart of an example of the operation of the area determination processing of the area determiner 310c of the wall detector 310 of the object recognition apparatus 1 according to at least one embodiment of the present disclosure. FIGs. 22A and 22B are illustrations of an area W1b determined by the area determiner 310c of the wall detector 310. The following describes the area determination processing of the area determiner 310c of the wall determiner 310 according to the present embodiment, referring to FIG. 21 and FIGs. 22A and 22B.

Step S 91

First, the area determiner 310c of the wall detector 310 of the image processing apparatus 30 obtains recognition information regarding a wall determined (detected) by the determiner 310b. Subsequently, the process proceeds to step S92.

Step S92

The area determiner 310c determines whether the wall of the obtained recognition information is present in the left area from the center of the real U map. When the wall is present in the left area (Yes in step S92), the process proceeds to step S93. When the wall is absent in the left area (the wall is present in the right area) (No in step S92), the process proceeds to step S97.

Step S93

When having determined that the wall is present in the left area, the area determiner 310c determines whether the wall is positioned on the innermost side within the left area along the direction of the actual distance. When the wall is positioned on the innermost side within the left area along the direction of the actual distance (Yes in step S93), the process proceeds to step S94. When the wall is not positioned on the innermost side within the left area along the direction of the actual distance (No in step S93), the process proceeds to step S95.

Step S 94

When the wall is positioned on the innermost side of the left area along the direction of the actual distance, the area determiner 310c updates the innermost position of the left area to the position of the wall in the direction of the actual distance. Subsequently, the process proceeds to step S95.

Step S95

The area determiner 310c determines whether the starting point of the wall, that is, the position on the front side in the direction of the disparity value dp is on the foremost side within the left area. When the position on the front side in the direction of the disparity value dp is on the foremost side within the left area (Yes in step S95), the process proceeds to step S96. When the position on the front side in the direction of the disparity value dp is not on the foremost side within the left area (No in step S 95), the process proceeds to step S101.

Step S96

When the position on the front side in the direction of the disparity value dp is on the foremost side within the left area, the region determiner 310c updates the foremost position within the left area to the position on the front side in the direction of the disparity value dp. Subsequently, the process proceeds to step S101.

Step S97

When having determined that the wall is present in the right area, the area determiner 310c determines whether the wall is positioned on the innermost side within the the right area along the direction of the actual distance. When the wall is positioned on the innermost side within the right area along the direction of the actual distance (Yes in step S97), the process proceeds to step S98. When the wall is not positioned on the innermost side within the right area along the direction of the actual distance (No in step S97), the process proceeds to step S99.

Step S98

When the wall is positioned on the innermost side of the right area along the direction of the actual distance, the area determiner 310c updates the innermost position of the right area to the position of the wall in the direction of the actual distance. Subsequently, the process proceeds to step S99.

Step S99

The area determiner 310c determines whether the starting point of the wall, that is, the position on the front side in the direction of the disparity value dp is on the foremost side within the the right side area. When the position on the front side in the direction of the disparity value dp is on the foremost side within the right area (Yes in step S99), the process proceeds to step S100. When the position on the front side in the direction of the disparity value dp is not on the foremost side within the right area (No in step S 99), the process proceeds to step S101.

Step S100

When the position on the front side in the direction of the disparity value dp is on the foremost side within the right area, the region determiner 310c updates the foremost position within the right area to the position on the front side in the direction of the disparity value dp. Subsequently, the process proceeds to step S101.

Step S101

The area determiner 310c determines whether the processes of step S92 through S100 have been completed for all the walls. When the processes has not been completed (No in step S101), the process proceeds to step S91. When the processes has been completed (Yes in step S101), the area determiner 310c determines an area that is a target for detecting an object (an object detection target area) within the real U map, e.g., a discontinuous three-dimensional object such as person or a car. For example, as illustrated in FIG. 22A, when the area of the wall corresponding to the innermost position and the foremost position in the left side area is the labeling area W1b, the area determiner 310c determines that the area (the rectangular circumscribing the wall) outside the labeling area W1b (See FIG. 22B) which the area AR is excluded from is determined as the object detection target area. With such a determination of the area determiner 310c, the area determination processing ends.

With the processes of steps S91 through S101, the area determiner 310c of the wall detector 310 performs the area determination processing.

As described above, the object recognition device 1 according to the present embodiment interpolates a pixel having no pixel value with the pixel value of another pixel adjacent to the pixel having no pixel in the movement prediction area of the current frame that has been predicted from the area detected as a wall in the previous frame. With such a configuration, continuity of pixels having pixel values in the depth direction can increase, thereby facilitating detection of walls in the wall detection processing.

Each processing of the above-described movement prediction area calculator 308, U-map interpolator 309, and wall detector 310 is not limited to processing for detecting a wall, and may also be performed on a discontinuous object such as a person or a vehicle. However, each processing of the movement prediction area calculator 308, the U-map interpolator 309, and the wall detector 310 greatly contributes to a stable detection of an object (a wall) particularly in detecting a wall-like object that elongates in the depth direction.

Variation

A description is given of the interpolation processing for the real U map by the U-map interpolator 309 of the image processing apparatus 30 according to a variation, focusing on the difference in interpolation processing between the above-descried embodiment and the present variation. In the above-described embodiment, the cases where the U-map interpolator 309 interpolates the pixel value of the pixel on immediately upper side of the pixel of interest and the pixel value of the pixel on immediately lower side of the pixel of interest with the pixel value of the pixel of interest are described. In the present variation, the U-map interpolator 309 interpolates the pixel value of the pixel between pixels having pixel values. The configurations of the device control system 60 and the object recognition device 1 according to the present modification are the same as those according to the above-described embodiment.

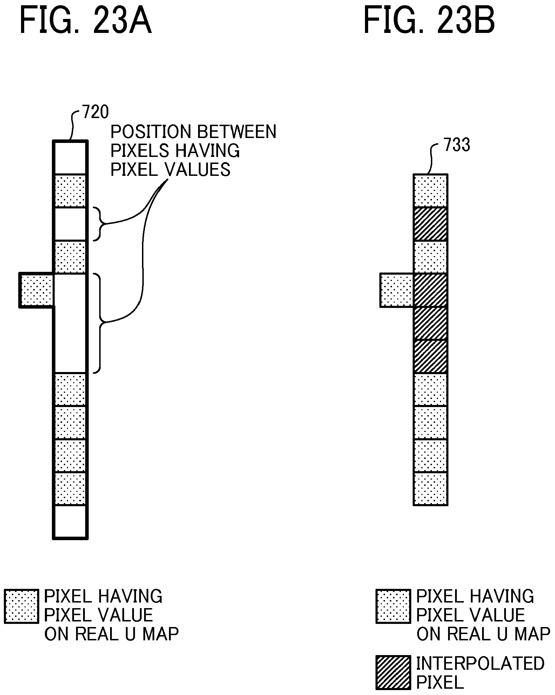

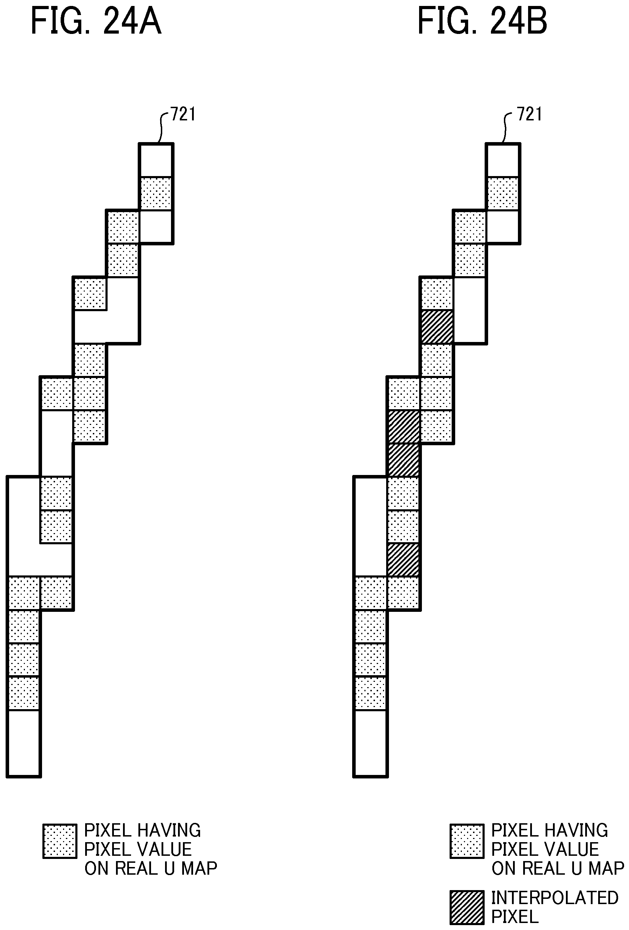

FIG. 23 is an illustration of interpolation of a linear wall by the object recognition device 1 according to a variation. FIG. 24 is an illustration of interpolation of a curved wall by the object recognition device 1 according to a variation. Referring to FIGs. 23 and 24, a description is given of the interpolation processing for the real U map performed by the U-map interpolator 309 of the object recognition device 1 according to the present variation.

In the present variation, the U-map interpolator 309 of the image processing apparatus 30 determines whether a pixel having no pixel value is present between the pixels having pixel values in the depth direction. When one or more pixels having no pixel values are present between the pixels having pixel values, the U-map interpolator 309 interpolates the pixels having no pixel values with a pixel value of the pixels on both ends of the pixels having no pixel values. For example, the U-map interpolator 309 interpolates the pixels having no pixel values with either one of the pixel values of the pixels on both ends of the pixels having no pixel values. Alternatively, the U-map interpolator 309 interpolates the pixels having not pixel values with the average of the pixel values of the pixels on both ends of the pixels having no pixel values. With such an interpolation processing according to the present variation, continuity in the depth direction further increases, thereby facilitating the detection of a wall in the following wall detection processing, as compared to the interpolation processing according to the above-described embodiment.

Such an interpolation processing interpolates the discontinuous pixels, which are intermittently spaced, within the movement prediction area 720 as illustrated in FIG. 23A so as to obtain the interpolated pixels as illustrated in FIG. 23B. In the example of FIG. 23B, a set of pixels having pixel values (an area 733) are obtained as the result of the interpolation of the pixels within the movement prediction area. That is, the interpolation processing according to the present variation allows obtaining one set of pixels having pixel values, unlike the interpolation processing according to the above-described embodiment in which two sets of pixels having pixel values are obtained as illustrated in FIG. 13B.

The movement prediction area 721 in FIG. 24A has a curved shape as a curved wall is detected in the previous frame. The movement prediction area 721 includes discontinuous pixels, which are intermittently spaced, as illustrated in FIG. 24A. Such a movement prediction area 721 in FIG. 24A can be interpolated by the interpolation processing according to the present variation to be as illustrated in FIG. 24B.

In the above-described embodiment and variation, cases where the object recognition device 1 is mounted on an automobile as the vehicle 70. However, no limitation is intended thereby. For example, the object recognition device 1 may be mounted on a motorbike, a bicycle, a wheelchair, or an agricultural cultivator, as other examples of the vehicle. Further, the mobile object according to the present disclosure is not limited to the vehicle, and may be a robot. Also, the distance value and the disparity value can be handled equivalently. Therefore, in the above-described embodiment, the disparity image is used as an example of the distance image, but the present disclosure is not limited to this. For example, a distance image may be generated by integrating distance information generated using a detection device such as a millimeter wave radar or a laser radar with respect to a disparity image generated by using a stereo camera. Further, a distance image may be generated by integrating the captured image by the camera and the distance information generated using the detection device such as the millimeter wave radar or the laser radar.

In the above-described embodiment and variation, when at least one of the functional units of the image processing apparatus 30 of the object recognition apparatus 1 is implemented by executing a program, the program is incorporated in, for example, the ROM in advance. The program executed by the object recognition device 1 according to the above-described embodiment and variation may be installed for distribution in any desired computer-readable recording medium such as a compact disc, a read-only memory (CD-ROM), a flexible disk (FD), a compact disc-recordable (CD-R), and a digital versatile disk (DVD) in a file format installable or executable by a computer. The program executed in the object recognition apparatus 1 according to the above-described embodiment and its variation may be provided as being stored on a computer connected to a network such as the Internet and downloaded via the network. In addition, the program executed by the object recognition apparatus 1 according to the embodiment and its variation may be provided or distributed via a network such as the Internet. In addition, the program executed by the object recognition apparatus 1 according to the embodiment and its variation is a module composition including at least one of the above-described functional units. As an actual hardware configuration, the CPU 32 reads and executes the program from the ROM 33 and each functional unit described above is executed to load into the main memory (for example, the RAM 34) to implement the each functional unit.

Aspects 1 through 11

In the above-described embodiment, the following disclosures are provided.

Aspect 1

An information processing apparatus (30) includes an imaging unit (200), a first generation unit, an interpolation unit, and an object detection unit. Based on first data obtained from an image of a mobile object captured in a moving direction by the imaging unit (200), the first generation unit generates second data. In the first data, a position in a first direction, a second direction different from the first direction in the captured image, and distance data are associated with each other. In the second data, actual distance in a direction perpendicular to the moving direction of the mobile object, the distance data, and an element value indicating a frequency of the distance data are associated with each other. The interpolation unit interpolates a value of an element having no element value in a third direction corresponding to the distance data, based on the element value of an element having the element value in the second data generated by the first generation unit, thus to obtain a continuous area. The object detection unit detects an object based on a continuous area of the element interpolated by the interpolation unit in the second data.

Aspect 2

In the information processing apparatus (30) according to Aspect 1, the interpolation unit interpolates the element having no element value, which is adjacent to the element having the element value along the third direction in the second data, based on the element value of the element having the element value.

Aspect 3

In the information processing apparatus (30) according to Aspect 1, when there is one or more elements having no element values between the elements each having the element value along the third direction in the second data, the interpolation unit interpolates the one or more elements having no element values based on the element values of the elements on both sides of the one or more element having no element values.

Aspect 4

In the information processing apparatus (30) according to any of Aspects 1 through 3 further includes a prediction unit to predict an area including a position of the object in the second data corresponding to a current frame based on an area of the object detected by the object detection unit, using the second data corresponding a previous frame of the image captured by the imaging unit (200). The interpolation unit interpolates an element value of an element having no element value, based on the element value of the element having the element value along the third direction in the area predicted by the prediction unit.

Aspect 5

In the information processing apparatus (30) according to any of Aspects 1 through 4, the object detection unit includes a continuous area detection unit and a determination unit. The continuous area detection unit detects the continuous area along the third direction in the two-dimensional distribution data. The determination unit determines whether the continuous area detected by the continuous area detection unit indicates the object.

Aspect 6

In the information processing apparatus (30) according to Aspect 5, the continuous area detection unit detects a continuous area including continuous elements each having the element value along the third direction in the second data.

Aspect 7

In the information processing apparatus (30) according to Aspect 5 or 6, the determining unit determines that the continuous area detected by the continuous area detection unit indicates the object when the continuous area has a length greater than or equal to a predetermined length in the third direction.

Aspect 8

An imaging device includes the imaging unit (200) and a second generation unit to generate the first data, and the information processing apparatus (30) according to any of Aspects 1 through 7.

Aspect 9

A device control system (60) includes the imaging device according to Aspect 8 and a control unit to control a control target based on a detection result of the object by the object detection unit.

Aspect 10

An information processing method includes generating, based on first data obtained from an image of a mobile object in a moving direction captured by the imaging unit (200), second data in which actual distance in a direction perpendicular to the moving direction of the mobile object, the distance data, and an element value indicating a frequency of the distance data are associated with each other; interpolating a value of an element having no element value in a third direction corresponding to the distance data, based on the element value of the element having the element value in the generated second data to obtain a continuous area of the element having the element value; and detecting an object based on the continuous area of the interpolated element in the second data. In the first data, a position in a first direction, a second direction different from the first direction in the captured image, and distance data are associated with each other.

Aspect 11

A non-transitory computer readable storage medium storing a program for causing a computer to execute a method includes generating, based on first data obtained from an image of a mobile object in a moving direction captured by the imaging unit (200), second data in which actual distance in a direction perpendicular to the moving direction of the mobile object, the distance data, and an element value indicating a frequency of the distance data are associated with each other; interpolating a value of an element having no element value in a third direction corresponding to the distance data, based on the element value of the element having the element value in the generated second data to obtain a continuous area of the element having the element value; and detecting an object based on the continuous area of the interpolated element in the second data. In the first data, a position in a first direction, a second direction different from the first direction in the captured image, and distance data are associated with each other.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. An information processing apparatus (30) comprising:

   a generation unit (307) to generate, from data in which a first position in a first direction, a second position in a second direction, and a third position in a third direction of an object are associated with each other, two-dimensional distribution data in which the first position in the first direction and the third position in the third direction are associated with each other;
   an interpolation unit (309) to interpolate a discontinuous area of pixels along the third direction in the two-dimensional data generated by the generation unit (307) to obtain a continuous area of pixels; and

an object detection unit (311) to detect the object based on the continuous area along the third direction interpolated by the interpolation unit (309).

2. The information processing apparatus (30) according to claim 1,
wherein the interpolation unit (309) interpolates the discontinuous area along the third direction in the two-dimensional data, with data in an area adjacent to the discontinuous area along the third direction.

3. The information processing apparatus (30) according to claim 1,
wherein the interpolation unit (309) interpolates the discontinuous area along the third direction in the two-dimensional data, with data of areas between which the discontinuous area is disposed along the third direction.

4. The information processing apparatus (30) according to any of claim 1 through 3, further comprising a prediction unit (308) to predict an area including a position of the object in a current frame based on an area of the object detected by the object detection unit (311) using data of a frame previous to the current frame,
wherein the interpolation unit (309) interpolates the discontinuous area along the third direction within the area predicted by the prediction unit (308), in the two-dimensional distribution data.

5. The information processing apparatus (30) according to any of claims 1 through 4,
wherein the object detection unit (310) includes:

a continuous area detection unit (310a) to detect the continuous area along the third direction in the two-dimensional distribution data; and
a determination unit (310b) to determine whether the continuous area detected by the continuous area detection unit (310a) represents the object.

6. The information processing apparatus (30) according to claim 5,
wherein the continuous area detection unit (310a) detects the continuous area in which data is continuous along the third direction in the two-dimensional distribution data.

7. The information processing apparatus (30) according to claim 5 or 6,
wherein the determination unit (310b) determines that the continuous area detected by the continuous area detection unit (310a) indicates the object when the continuous area has a length greater than or equal to a predetermined length in the third direction.

8. An imaging device (1) comprising:

the image processing apparatus according to any of claim 1 through 7; and
an imaging unit (200) to capture an image of the image to generate a distance image including the data in which the first position in the first direction, the second position in the second direction, and the third position in the third direction of the object are associated with each other.

9. A device control system (60) comprising:

the imaging device (1) according to claim 8; and
a control unit (6) to control a control target based on a detection result of the object detection unit (310).

10. A mobile object (70) comprising the device control system (60) according to claim 9, wherein the control target is the mobile object (70).

11. An information processing method comprising:

generating two-dimensional distribution data from data in which a first position in a first direction, a second position in a second direction, and a third position in a third direction of an object are associated with each other, the two-dimensional distribution data in which the first position in the first direction and the second position in the third direction are associated with each other;
interpolating a discontinuous area of pixels along the third direction in the two-dimensional data generated in the generating the two-dimensional distribution data to obtain a continuous data of pixels (S13); and
detecting the object based on the continuous area along the third direction interpolated in the interpolating (S14).

**12.** A carrier means carrying computer readable code for controlling a computer to carry out the method of claim 11.

FIG. 1A

LEFT FIELD OF VIEW — RIGHT FIELD OF VIEW

DIRECTION OF TRAVEL OF VEHICLE

FIG. 1B

FIG. 1C

# FIG. 2

```
┌──────────────┐      ┌──────────────┐      ┌──────────────┐
│   OBJECT     │ ⌐1   │   VEHICLE    │ ⌐6   │   CONTROL    │ ⌐9
│ RECOGNITION  │─────▶│ CONTROLLER   │─────▶│   TARGET     │
│   DEVICE     │      │    (ECU)     │      │              │
└──────────────┘      └──────────────┘      └──────────────┘
```

# FIG. 3

# FIG. 4

# FIG. 5

# FIG. 6A

# FIG. 6B

DISPARITY
VALUE dp

# FIG. 7A

# FIG. 7B

# FIG. 8A

# FIG. 8B

# FIG. 9

```
                    ┌─────────────┐
                    │    START    │
                    └─────────────┘
                           │
                           ▼
              ╱─────────────────────────╲        S11
       NO    ╱       IS THERE             ╲
      ◄─────╱  WALL DETECTED IN PREVIOUS   ╲
            ╲           FRAME?             ╱
             ╲─────────────────────────────╱
                           │ YES
                           ▼
              ┌───────────────────────────┐
              │  PREDICT MOVEMENT BASED    │     S12
              │        ON HISTORY          │
              └───────────────────────────┘
                           │
                           ▼
              ┌───────────────────────────┐
              │ PERFORM U-MAP INTERPOLATING│     S13
              │         PROCESS            │
              └───────────────────────────┘
                           │
                           ▼
              ┌───────────────────────────┐
              │   PERFORM WALL DETECTION   │     S14
              │          PROCESS           │
              └───────────────────────────┘
                           │
                           ▼
              ╱─────────────────────────╲        S15
       NO    ╱      IS THERE DETECTED     ╲
      ◄─────╱            WALL?             ╲
            ╲─────────────────────────────╱
                           │ YES
                           ▼
              ┌───────────────────────────┐
              │   STORE DETECTION RESULT   │     S16
              │        AS HISTORY          │
              └───────────────────────────┘
                           │
                           ▼
                    ┌─────────────┐
                    │     END     │
                    └─────────────┘
```

# FIG. 10A

700
AMOUNT OF MOVEMENT OF VEHICLE

701
AMOUNT OF MOVEMENT OF VEHICLE

711

710

DIRECTION OF TRAVEL OF VEHICLE

⊓ AREA BASED ON DETECTION RESULT OF PREVIOUS FRAME

◪ PREDICTED MOVEMENT AREA

# FIG. 10B

AMOUNT OF MOVEMENT OF VEHICLE

702

AMOUNT OF MOVEMENT OF VEHICLE

712

DIRECTION OF TRAVEL OF VEHICLE

⊓ AREA BASED ON DETECTION RESULT OF PREVIOUS FRAME

◪ PREDICTED MOVEMENT AREA

# FIG. 11

$y$

$P(X,Y)$

$P'(X',Y')$

$\theta$

move_y

move_x

$x$

# FIG. 12

START

SPECIFY EACH PIXEL WITHIN
PREDICTED MOVEMENT AREA — S31

SPECIFIED
PIXEL OF INTEREST HAS
PIXEL VALUE? — S32
NO

↓YES

PIXEL
ON UPPER SIDE OF PIXEL
OF INTEREST HAS 0 PIXEL
VALUE? — S33
NO

↓YES

INTERPOLATE PIXEL VALUE OF PIXEL
ON UPPER SIDE OF PIXEL OF
INTEREST WITH PIXEL VALUE
OF PIXEL OF INTEREST — S34

PIXEL ON
LOWER SIDE OF PIXEL
OF INTEREST HAS 0 PIXEL
VALUE? — S35
NO

↓YES

INTERPOLATE PIXEL VALUE OF PIXEL
ON LOWER SIDE OF PIXEL OF
INTEREST WITH PIXEL VALUE
OF PIXEL OF INTEREST — S36

PROCESSING
IS COMPLETED ON ALL OF
THE PIXELS? — S37
NO

↓YES

END

# FIG. 13A

720

PIXEL HAVING
PIXEL VALUE
ON REAL U MAP

# FIG. 13B

731

PIXEL HAVING
PIXEL VALUE
ON REAL U MAP

INTERPOLATED
PIXEL

732

# FIG. 14A

# FIG. 14B

721

721

▓ PIXEL HAVING
PIXEL VALUE
ON REAL U MAP

▓ PIXEL HAVING
PIXEL VALUE
ON REAL U MAP

▨ INTERPOLATED
PIXEL

# FIG. 15

START

OBTAIN PIXEL VALUE OF
NEXT REAL U MAP — S51

PIXEL VALUE EXISTS? — S52

NO

YES

IS THERE
LABELED PIXEL WITHIN
N PIXELS UPWARD ON
REAL U MAP — S53

NO

YES

LABEL OBTAINED PIXEL AS
THE SAME — S54

NEWLY LABEL OBTAINED
PIXEL — S55

FINAL PIXEL? — S56

NO

YES

END

# FIG. 16A

EXAMPLE OF FREQUENCY
(PIXEL VALUE) IN REAL U MAP

# FIG. 16B

EXAMPLE OF LABELING RESULT

# FIG. 17A

DISPARITY
VALUE dp
RM1

W1

C1

ACTUAL DISTANCE

# FIG. 17B

LABELING RESULT

DISPARITY
VALUE dp

W1a

C1a

ACTUAL DISTANCE

# FIG. 18

```
            ┌─────────────┐
            │    START     │
            └──────┬──────┘
                   │        ┌S71
        ┌──────────▼─────────────┐
        │  OBTAIN RESULT OF LABELING │
        │       PROCESSING         │
        └──────────┬─────────────┘
                   │        ┌S72
        ┌──────────▼─────────────┐
        │ SELECT AREA OF CONTINUOUS PIXELS │
        └──────────┬─────────────┘
                   │        ┌S73
                  ◇ PREDETERMINED ──── NO
                  ◇ LENGTH OR MORE?        │
                   │ YES                   │
                   │        ┌S74          │
        ┌──────────▼─────────────┐        │
        │      DETECT AS WALL      │        │
        └──────────┬─────────────┘◄───────┘
                   │        ┌S75
       NO ◇  PROCESSING
          ◇  IS COMPLETED ON ALL OF
          ◇  THE LABELS?
                   │ YES
            ┌──────▼──────┐
            │    END       │
            └─────────────┘
```

## FIG. 19A

LABELING RESULT

## FIG. 19B

DETERMINATION RESULT

EP 3 330 892 A1

# FIG. 20A

# FIG. 20B

# FIG. 21

START

S91
OBTAIN INFORMATION
REGARDING DETECTED WALL

S92
IS THERE
WALL IN AREA ON
THE LEFT FROM THE
CENTER OF THE
WALL? —— NO

YES

S93
POSITION
IN DIRECTION OF
ACTUAL DISTANCE IS ON
THE INNERMOST SIDE
WITHIN THE LEFT
AREA? —— NO

YES — S94
UPDATE THE INNERMOST
POSITION IN THE LEFT AREA

S95
STARTING
POINT IS ON THE MOST
FRONT SIDE IN THE
LEFT AREA? —— NO

YES — S96
UPDATE THE MOST FRONT
POSITION IN THE LEFT AREA

S97
POSITION
IN DIRECTION OF
ACTUAL DISTANCE IS ON
THE INNERMOST SIDE
WITHIN THE RIGHT
AREA? —— NO

YES — S98
UPDATE THE INNERMOST
POSITION IN THE RIGHT AREA

S99
STARTING
POINT IS ON THE MOST
FRONT SIDE IN THE
RIGHT AREA? —— NO

YES — S100
UPDATE THE MOST FRONT
POSITION IN THE RIGHT AREA

S101
ALL
NO —— OF THE WALLS ARE
SEARCHED?

YES

END

# FIG. 22A

DISPARITY
VALUE dp

W1b

ACTUAL DISTANCE

# FIG. 22B

DISPARITY
VALUE dp

W1b

AR

ACTUAL DISTANCE

WALL AND AREA
OUTSIDE THE WALL

# FIG. 23A

720

POSITION BETWEEN
PIXELS HAVING
PIXEL VALUES

PIXEL HAVING
PIXEL VALUE
ON REAL U MAP

# FIG. 23B

733

PIXEL HAVING
PIXEL VALUE
ON REAL U MAP

INTERPOLATED
PIXEL

# FIG. 24A

721

# FIG. 24B

721

PIXEL HAVING
PIXEL VALUE
ON REAL U MAP

PIXEL HAVING
PIXEL VALUE
ON REAL U MAP

INTERPOLATED
PIXEL

Europäisches
Patentamt

European
Patent Office

Office européen
des brevets

# EUROPEAN SEARCH REPORT

Application Number

EP 17 20 4110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUNG-HEE LEE: "Stereo vision-based vehicle detection using a road feature and disparity histogram", OPTICAL ENGINEERING, vol. 50, no. 2, 1 February 2011 (2011-02-01), page 027004, XP055049147, ISSN: 0091-3286, DOI: 10.1117/1.3535590 * section 4.1 * | 1-12 | INV. G06K9/00 |
| X | HALLER I ET AL: "Real-time semi-global dense stereo solution with improved sub-pixel accuracy", INTELLIGENT VEHICLES SYMPOSIUM (IV), 2010 IEEE, IEEE, PISCATAWAY, NJ, USA, 21 June 2010 (2010-06-21), pages 369-376, XP031732265, ISBN: 978-1-4244-7866-8 * section 2; page 373 * | 1,8-12 | |
| X | FAN LEI ET AL: "3D map repair after moving objects removing", 2016 INTERNATIONAL CONFERENCE ON ADVANCED ROBOTICS AND MECHATRONICS (ICARM), IEEE, 18 August 2016 (2016-08-18), pages 127-132, XP032985657, DOI: 10.1109/ICARM.2016.7606907 [retrieved on 2016-10-21] * section B; page 129 * | 1,8-12 | TECHNICAL FIELDS SEARCHED (IPC) G06K |
| X | EP 3 054 400 A1 (TOYOTA MOTOR CO LTD [JP]) 10 August 2016 (2016-08-10) * paragraph [0032] - paragraph [0038]; figures 4A-5B * | 1,8-12 | |

-/--

The present search report has been drawn up for all claims

| Place of search | Date of completion of the search | Examiner |
|---|---|---|
| The Hague | 18 April 2018 | Bakker, Jeroen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

## EUROPEAN SEARCH REPORT

Application Number

EP 17 20 4110

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JENS SCHMUEDDERICH ET AL: "System approach for multi-purpose representations of traffic scene elements", INTELLIGENT TRANSPORTATION SYSTEMS (ITSC), 2010 13TH INTERNATIONAL IEEE CONFERENCE ON, IEEE, PISCATAWAY, NJ, USA, 19 September 2010 (2010-09-19), pages 1677-1684, XP031792760, ISBN: 978-1-4244-7657-2 * section II A; page 1679 * | 1,8-12 | |
| X | PILLAI SUDEEP ET AL: "High-performance and tunable stereo reconstruction", 2016 IEEE INTERNATIONAL CONFERENCE ON ROBOTICS AND AUTOMATION (ICRA), IEEE, 16 May 2016 (2016-05-16), pages 3188-3195, XP032908558, DOI: 10.1109/ICRA.2016.7487488 [retrieved on 2016-06-08] * page 3189, column 1 * * section III; page 3190 * | 1,8-12 | |

TECHNICAL FIELDS
SEARCHED (IPC)

The present search report has been drawn up for all claims

| Place of search | Date of completion of the search | Examiner |
|---|---|---|
| The Hague | 18 April 2018 | Bakker, Jeroen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 4110

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2018

| Patent document cited in search report | | Publication date | Patent family member(s) | | Publication date |
|---|---|---|---|---|---|
| EP 3054400 | A1 | 10-08-2016 | CN | 105868688 A | 17-08-2016 |
| | | | EP | 3054400 A1 | 10-08-2016 |
| | | | JP | 6156400 B2 | 05-07-2017 |
| | | | JP | 2016146118 A | 12-08-2016 |
| | | | US | 2016232413 A1 | 11-08-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3516856 B
- JP H11213138 A
- JP 4956099 B
- JP 2008059323 A